# EUROPEAN PATENT APPLICATION

(11) **EP 4 535 842 A1**
(43) Date of publication of application: **09.04.2025**
(21) Application number: 24764735.7
(22) Date of filing: 28.06.2024
(51) Int. Cl.: H04W 4/80, H04W 4/06, H04M 1/72412, G06F 3/16, H04R 3/12, H04L 67/1095, H04M 1/72409

(54) **ELECTRONIC DEVICE FOR ASSISTING TRANSMISSION OF ADVERTISEMENT SIGNAL FOR BIS SERVICE, AND OPERATION METHOD THEREFOR**

(30) Priority: 20.08.2023 KR 20230108698; 31.10.2023 KR 20230148544
(71) Applicant: Samsung Electronics Co., Ltd, Suwon-si, Gyeonggi-do 16677 (KR)
(72) Inventor: YOON, Heejae, Suwon-si Gyeonggi-do 16677 (KR); KANG, Doosuk, Suwon-si Gyeonggi-do 16677 (KR); YOO, Hyungseoung, Suwon-si Gyeonggi-do 16677 (KR); CHEONG, Gupil, Suwon-si Gyeonggi-do 16677 (KR)
(74) Representative: Gulde & Partner
(86) International application number: PCT/KR2024/009045
(87) International publication number: WO 2025/042020

(57) **Abstract**

Various embodiments of the disclosure relate to an electronic device and an operating method thereof for assisting in an advertising signal transmission for a broadcast isochronous stream (BIS) service. An electronic device according to an embodiment of the disclosure may include a communication circuitry configured to support Bluetooth Low Energy (BLE) communication, at least one processor and memory storing instructions that, when executed by the at least one processor, cause the electronic device to transmit a request for assistance in an advertising signal transmission for a broadcast isochronous stream (BIS) service to a first external electronic device, transmit information on an advertising signal including information related to the BIS service to the first external electronic device, perform a negotiation for the assistance in the advertising signal transmission with the first external electronic device, based on the information on the advertising signal, and transmit information related with the assistance in the advertising signal transmission to the first external electronic device, based on a negotiation result.

## Description

### [Technical Field]

Various embodiments of the disclosure relate to an electronic device and an operating method thereof for assisting in an advertising signal transmission for a broadcast isochronous stream (BIS) service.

### [Background Art]

Bluetooth communication technology may support short-range wireless communication that enables electronic devices to connect with each other to exchange data or information. Bluetooth communication technology may include Bluetooth legacy (or classic) communication technology or Bluetooth Low Energy (BLE or LE) communication technology, and may have various connection types of topologies, such as a piconet or a scatternet.

A BLE isochronous channels function is a function of transmitting data between devices using Bluetooth LE, and provides a method by which the same source device and sink devices are synchronized in time to transmit and receive data. The BLE isochronous channels function may operate on a connection-oriented or connectionless basis.

In a connectionless BLE isochronous channel, synchronization may be performed using an advertising signal. A source device may broadcast an advertising signal, and a sink device may monitor reception of the advertising signal broadcast by the source device.

### [Disclosure of Invention]

### [Technical Problem]

A connectionless BLE isochronous channels function may need an effective advertising signal transmission and reception method for synchronization. A signal transmission and reception method for providing high-quality data transmission and reception by providing flexibility in radio resource management of a source device and enabling sink devices to quickly perform synchronization by using an advertising signal may be needed.

An embodiment of the disclosure may provide an electronic device and an operating method thereof for assisting in an advertising signal transmission for a broadcast isochronous stream (BIS) service.

The technical subjects pursued in the disclosure may not be limited to the above-mentioned technical subjects, and other technical subjects which are not mentioned may be clearly understood, through the following descriptions, by those skilled in the art to which the disclosure pertains.

### [Solution to Problem]

An electronic device according to an embodiment of the disclosure may include a communication circuitry configured to support Bluetooth Low Energy (BLE) communication, at least one processor and memory storing instructions that, when executed by the at least one processor, cause the electronic device to transmit a request for assistance in an advertising signal transmission for a broadcast isochronous stream (BIS) service to a first external electronic device, transmit information on the advertising signal including information related to the BIS service to the first external electronic device, perform a negotiation for the assistance in the advertising signal transmission with the first external electronic device, based on the information on the advertising signal, and transmit information related with the assistance in the advertising signal transmission to the first external electronic device, based on a negotiation result.

An operating method of an electronic device according to an embodiment of the disclosure may include transmitting a request for assistance in an advertising signal transmission for a broadcast isochronous stream, BIS, service to a first external electronic device, transmitting information on the advertising signal including information related to the BIS service to the first external electronic device, performing a negotiation for the assistance in the advertising signal transmission with the first external electronic device, based on the information on the advertising signal, and transmitting information related with the assistance in the advertising signal transmission to the first external electronic device, based on a negotiation result.

### [Advantageous Effects of Invention]

According to an embodiment of the disclosure, it is possible to provide high-quality data transmission and reception by providing flexibility in radio resource management of a source device and enabling sink devices to quickly perform synchronization by using an advertising signal.

Advantageous effects obtainable from the disclosure may not be limited to the above-mentioned effects, and other effects which are not mentioned may be clearly understood, through the following descriptions, by those skilled in the art to which the disclosure pertains.

### [Brief Description of Drawings]

FIG. 1 is a block diagram of an electronic device in a network environment according to an embodiment;
FIG. 2 illustrates connection between an electronic device and a plurality of external electronic devices according to an embodiment;
FIG. 3 illustrates connectionless communication according to an embodiment;
FIG. 4 illustrates a broadcast isochronous group (BIG) event and a broadcast isochronous stream (BIS) event according to an embodiment;
FIG. 5 illustrates a sequential arrangement and interleaved arrangement of BISs according to an embodiment;
FIG. 6 illustrates allocation of payloads of a BIS according to an embodiment;
FIG. 7 illustrates an operation of assisting in an advertising signal transmission for a BIS service according to an embodiment;
FIG. 8 is a block diagram simply illustrating the configuration of an electronic device according to an embodiment;
FIG. 9 is a block diagram simply illustrating the configuration of a first external electronic device according to an embodiment;
FIG. 10 is a block diagram simply illustrating the configuration of a second external electronic device according to an embodiment;
FIG. 11 is a flowchart illustrating an operating method for assisting in an advertising signal transmission for a BIS service according to an embodiment;
FIG. 12 is a flowchart illustrating an operating method for assisting in an advertising signal transmission for a BIS service according to an embodiment;
FIG. 13 is a flowchart illustrating an operating method for assisting in an advertising signal transmission for a BIS service according to an embodiment;
FIG. 14 illustrates a method of transmitting an advertising signal according to an embodiment;
FIG. 15 illustrates a method of transmitting an advertising signal according to an embodiment;
FIG. 16 illustrates a method of transmitting an advertising signal according to an embodiment;
FIG. 17illustrates a method of transmitting an advertising signal according to an embodiment;
FIG. 18 illustrates a method of transmitting an advertising signal according to an embodiment;
FIG. 19 is a flowchart illustrating an operating method of an electronic device according to an embodiment;
FIG. 20 is a flowchart illustrating an operating method of a first external electronic device according to an embodiment;
FIG. 21 is a flowchart illustrating an operating method of an account server according to an embodiment; and
FIG. 22 is a flowchart illustrating an operating method of an electronic device according to an embodiment.

### [Best Mode for Carrying out the Invention]

According to an embodiment, by having the first external electronic device (900) assist in advertising signal transmission performed by the electronic device (800), the resources of the electronic device 800 may be flexibly managed and audio quality may be improved by providing fast BIS synchronization.

An electronic device 800 according to an embodiment may include a communication circuitry 810 configured to support Bluetooth Low Energy, BLE, communication, at least one processor 830 and memory (820) storing instructions that, when executed by the at least one processor (830), cause the electronic device (800) to transmit a request for assistance in an advertising signal transmission for a broadcast isochronous stream, BIS, service to a first external electronic device 900, transmit information on the advertising signal including information related to the BIS service to the first external electronic device 900, perform a negotiation for the assistance in the advertising signal transmission with the first external electronic device 900, based on the information on the advertising signal, and transmit information related with the assistance in the advertising signal transmission to the first external electronic device 900, based on a negotiation result.

In an embodiment, the instructions, when executed by the at least one processor 830 may further cause the electronic device 800 to determine whether the assistance in the advertising signal transmission is required, based on at least one of an external input, an available radio resource, or a radio frequency, RF, environment, while performing the BIS service.

In an embodiment, the information related to the BIS service may include at least one of extended advertising, EA, information, periodic advertising, PA, information, or broadcast isochronous group, BIG, synchronization information.

In an embodiment, the instructions, when executed by the at least one processor 830 may further cause the electronic device 800 to perform a negotiation for at least one of a type of the advertising signal, assistance time, or an assistance type for the assistance in the advertising signal transmission when performing the negotiation for the assistance in the advertising signal transmission with the first external electronic device 900.

In an embodiment, the type of the advertising signal may include an EA signal and a PA signal, the assistance time includes at least part of a BIS service period, a period determined by a preset algorithm, and a period in which the electronic device 800 is unable to broadcast the advertising signal, and the assistance type may include a first assistance type according to which the first external electronic device 900 broadcasts at least one of an EA signal and a PA signal that are the same as an EA signal and a PA signal of the electronic device 800 and a second assistance type according to which the first external electronic device 900 generates and broadcasts an independent PA signal including broadcast isochronous group, BIG, synchronization information that is the same as BIG synchronization information included in the PA signal of the electronic device 800 and an independent EA signal including PA information to synchronize with the independent PA signal.

In an embodiment, the information related with the assistance in the advertising signal transmission may include time information for starting the assistance in the advertising signal transmission.

In an embodiment, the instructions, when executed by the at least one processor 830 may further cause the electronic device 800 to broadcast the advertising signal, based on at least one of an external input, a determination as to whether a predetermined condition is satisfied, or a notification from the first external electronic device 900.

In an embodiment, the instructions, when executed by the at least one processor 830 may further cause the electronic device 800 to perform the negotiation for the assistance in the advertising signal transmission with each first external electronic device 900 when a plurality of first external electronic devices 900.

In an embodiment, the instructions, when executed by the at least one processor 830 may further cause the electronic device 800 to perform the negotiation for the assistance in the advertising signal transmission with the first external electronic device 900 through a server in case that the electronic device 800 and the first external electronic device 900 are related with a same account, and enable the electronic device 800 to transmit the advertising signal for a predetermined time, based on the negotiation result, the information related with the assistance in the advertising signal transmission may not be transmitted to the first external electronic device 900, and the electronic device 800 and the first external electronic device 900 may be registered in the server with the same account.

In an embodiment, the instructions, when executed by the at least one processor 830 may further cause the electronic device 800 to broadcast at least one BIS for at least one second external electronic device 1000.

An operating method of an electronic device 800 according to an embodiment may include transmitting a request for assistance in an advertising signal transmission for a broadcast isochronous stream, BIS, service to a first external electronic device 900 (1920), transmitting information on the advertising signal including information related to the BIS service to the first external electronic device 900 (1930), performing a negotiation for the assistance in the advertising signal transmission with the first external electronic device 900, based on the information on the advertising signal (1940), and transmitting information related with the assistance in the advertising signal transmission to the first external electronic device 900, based on a negotiation result (1950).

In an embodiment, the method may further include determining whether the assistance in the advertising signal transmission is required, based on at least one of an external input, an available radio resource, or a radio frequency, RF, environment, while performing the BIS service.

In an embodiment, the information related to the BIS service may include at least one of extended advertising, EA, information, periodic advertising, PA, information, or broadcast isochronous group, BIG, synchronization information.

In an embodiment, the performing of the negotiation for the assistance in the advertising signal transmission with the first external electronic device 900 may include performing a negotiation for at least one of a type of the advertising signal, assistance time, or an assistance type for the assistance in the advertising signal transmission.

In an embodiment, the type of the advertising signal may include an EA signal and a PA signal, the assistance time may include at least part of a BIS service period, a period determined by a preset algorithm, and a period in which the electronic device 800 is unable to broadcast the advertising signal, and the assistance type may include a first assistance type according to which the first external electronic device 900 broadcasts at least one of an EA signal and a PA signal that are the same as an EA signal and a PA signal of the electronic device 800 and a second assistance type according to which the first external electronic device 900 generates and broadcasts an independent PA signal including broadcast isochronous group, BIG, synchronization information that is the same as BIG synchronization information included in the PA signal of the electronic device 800 and an independent EA signal including PA information to synchronize with the independent PA signal.

In an embodiment, the information related with the assistance in the advertising signal transmission may include time information for starting the assistance in the advertising signal transmission.

In an embodiment, the method may further include broadcasting the advertising signal, based on at least one of an external input, a determination as to whether a predetermined condition is satisfied, or a notification from the first external electronic device 900.

In an embodiment, the performing of the negotiation for the assistance in the advertising signal transmission with the first external electronic device 900 may include performing the negotiation for the assistance in the advertising signal transmission with each first external electronic device 900 when there is a plurality of first external electronic devices 900.

In an embodiment, the method may further include performing the negotiation for the assistance in the advertising signal transmission with the first external electronic device 900 through a server in case that the electronic device 800 and the first external electronic device 900 are related with a same account and enabling the electronic device 800 to transmit the advertising signal for a predetermined time, based on the negotiation result, the information related with the assistance in the advertising signal transmission may not be transmitted to the first external electronic device 900, and the electronic device 800 and the first external electronic device 900 may be registered in the server with the same account.

In an embodiment, the method may further include broadcasting at least one BIS for at least one second external electronic device 1000.

### [Mode for the Invention]

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Furthermore, the size of each element does not completely reflect the actual size. In the respective drawings, the same or corresponding elements are provided with the same or corresponding reference numerals.

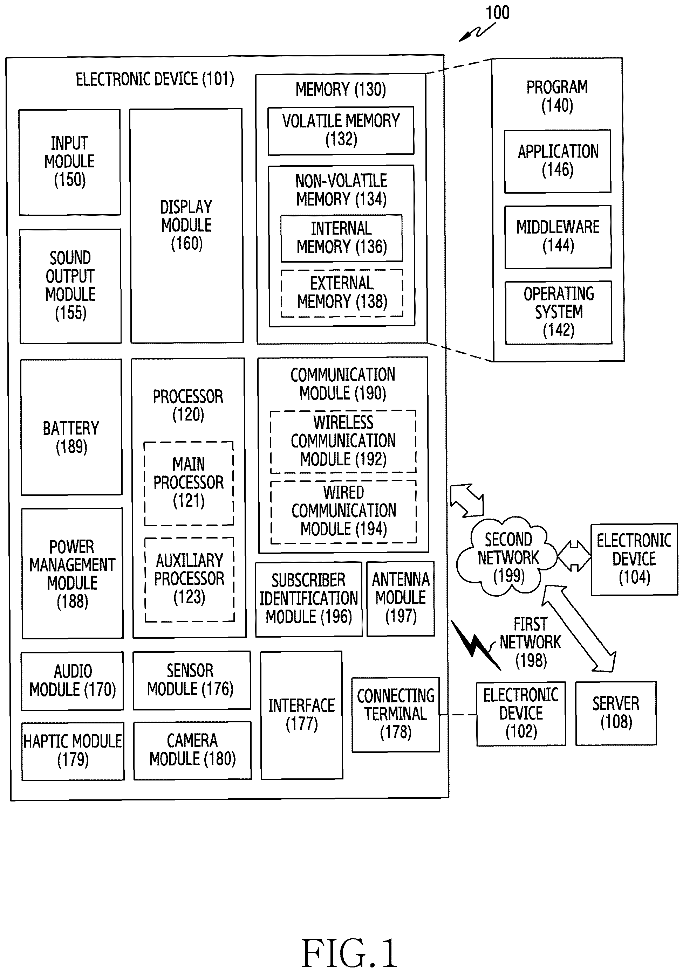

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

The term "transmission" used in various embodiments of the disclosure may include all transmissions in unicast, multicast, and broadcast modes. In an embodiment of the disclosure, transmission of an advertising signal may refer to broadcast of the advertising signal. For example, transmission of an extended advertising (EA) signal and/or periodic advertising (PA) signal may refer to broadcast of the EA signal and PA signal. Further, in an embodiment of the disclosure, transmission of a broadcast isochronous stream (BIS) may refer to broadcast of the BIS stream. The broadcast of the BIS stream may refer to transmitting or broadcasting data, based on the BIS stream. Specifically, the broadcast of the BIS stream may refer to transmitting or broadcasting a BIS packet, a BIS protocol data unit (PDU), data, sound source data, and the like through the BIS stream.

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

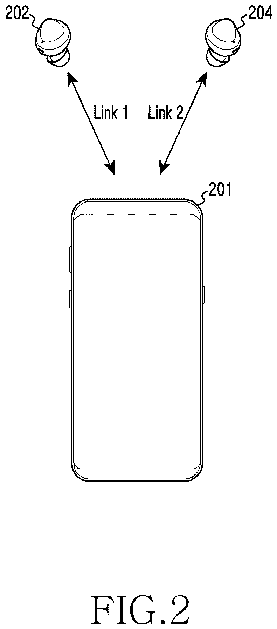

FIG. 2 illustrates connection between an electronic device and a plurality of external electronic devices according to an embodiment.

Referring to FIG. 2, an electronic device 201 may be a master device or a source device that provides data (e.g., audio data or multimedia data). The electronic device 201 may be an electronic device, such as a smartphone, or may be the electronic device 101 of FIG. 1. According to an embodiment, external electronic device #1 202 and external electronic device #2 204 may be slave devices or sink device capable of receiving data from the electronic device 201 and processing or outputting the received data. External electronic device #1 202 and external electronic device #2 204 may each be the electronic device 102 or the electronic device 104 of FIG. 1.

The electronic device 201 and external electronic device #1 202 or the electronic device 201 and external electronic device #2 204 may be connected to each other, based on a wireless communication technology (e.g., Bluetooth Legacy (or Classic) or Bluetooth Low Energy (BLE) communication technology), to perform data transmission and reception.

Various embodiments to be described below illustrate a case where the electronic device 201 transmits data to two external electronic devices 202 and 204. For example, the electronic device 201 may transmit sound data providable for a user to external electronic device #1 202 and/or external electronic device #2 204.

In an embodiment, external electronic device #1 202 and/or external electronic device #2 204 may be devices included in one set. For example, each device included in the set may be a device that is connected through a separate communication link and provides a related function to provide one integrated service (e.g., stereo sound output or 5.1-channel sound output). For example, external electronic device #1 202 and external electronic device #2 204 may be wireless earphone devices that operate as a set. External electronic device #1 202 may be one of a left external device and a right external device, and external electronic device #2 204 may be the other of the left external device and the right external device. In an embodiment, when external electronic device #1 202 and external electronic device #2 204 are configured as wireless earphones, external electronic device #1 202 and/or external electronic device #2 204 may each receive various data (e.g., data for synchronization of sounds outputtable from the wireless earphones, data for adjustment of a sound, or a response signal corresponding to a signal transmitted by the electronic device 201) from the electronic device 201.

Although FIG. 2 shows, but not limited to, an example in which the electronic device 201 is connected to the two external electronic devices 202 and 204, the electronic device 201 may be connected to various numbers of three or more external electronic devices. Various embodiments may be applied to devices that receive data transmitted by the electronic device 201 that are not only the external devices but also other types of devices capable of wireless communication with the electronic device 201, such as a smartphone, a smartwatch, or a tablet PC.

In an embodiment, the electronic device 201 may establish a first communication link (link 1) to perform data communication with external electronic device #1 202. In an embodiment, the electronic device 201 may establish a second communication link (link 2) to perform data communication with external electronic device #2 204. If necessary, external electronic device #1 202 and/or external electronic device #2 204 may be additionally connected through a separate third communication link (not shown).

In an embodiment, connection-oriented communication may be performed through the first communication link and the second communication link. Further, connectionless communication may be performed between the electronic device 201, and external electronic device #1 202 and external electronic device #2 204. The connection-oriented communication and the connectionless communication may be performed through isochronous (ISO) channels.

In an embodiment, the electronic device 201 may transmit various signals (e.g., an advertising signal) to external electronic device #1 202 and/or external electronic device #2 204 to generate a communication link with or synchronize with external electronic device #1 202 and/or external electronic device #2 204.

In an embodiment, the electronic device 201 may receive various pieces of information (e.g., connected device information and/or device attribute information) from external electronic device #1 202 and/or external electronic device #2 204, and may provide various user interfaces (e.g., a notification or control interface) through a display (e.g., the display module 160 of FIG. 1), based on the received information.

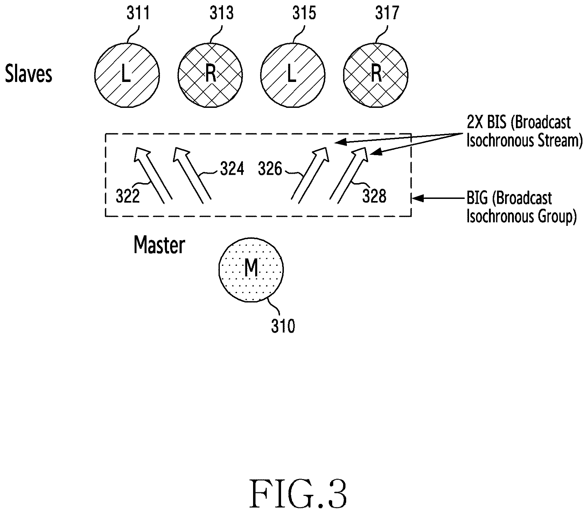

FIG. 3 illustrates connectionless communication according to an embodiment.

Referring to FIG. 3, an electronic device 301 (e.g., a smartphone) may perform connectionless communication of transmitting broadcast data. The connectionless communication may refer to one-way communication from the electronic device 310 to one or more external electronic devices (e.g., earbud devices). The one or more external electronic devices may include, for example, a first earbud device 311 (e.g., a left earbud device) and a second earbud device 313 (e.g., a right earbud device), and a third earbud device 315 (e.g., another left earbud device) and a fourth earbud device 317 (e.g., another right earbud device). The first earbud device 311 and the second earbud device 313 may be different devices from the third earbud device 315 and the fourth earbud device 317.

The electronic device 310 may be the electronic device 101 of FIG. 1, the electronic device 201 of FIG. 2, or the electronic device 301 of FIG. 3. The first earbud device 311 (or the third earbud device 315) may be the electronic device 102 or the electronic device 104 of FIG. 1 or external electronic device #1 202 of FIG. 2. The second earbud device 313 (or the fourth earbud device 317) may be the electronic device 102 or the electronic device 104 of FIG. 1 or external electronic device #2 204 of FIG. 2.

In the connectionless communication, broadcast data may be transmitted (or streamed) using synchronized streams. In an embodiment of the disclosure, transmission of a broadcast isochronous stream (BIS) may refer to broadcast of the BIS stream. The broadcast of the BIS stream may refer to transmitting or broadcasting data, based on the BIS stream. Specifically, the broadcast of the BIS stream may refer to transmitting or broadcasting a BIS packet, a BIS protocol data unit (PDU), data, sound source data, and the like through the BIS stream. Each of the synchronized streams may be a broadcast isochronous stream (BIS), which is a broadcast data transmission stream, and may support retransmission to increase reliability of packet transmission. The synchronized streams may be included in a broadcast isochronous group (BIG).

Referring to FIG. 3, a first BIS 322, a second BIS 324, a third BIS 326, and a fourth BIS 328 may be used for transmission of the broadcast data from the electronic device 310 that may be called a master electronic device M or an Isochronous Broadcaster. The first BIS 322, the second BIS 324, the third BIS 326, and the fourth BIS 328 may be included in the same BIG. The first earbud device 311 may receive the broadcast data through the first BIS 322, and the second earbud device 313 may receive the broadcast data through the second BIS 324, the third earbud device 315 may receive the broadcast data through the third BIS 326, and the fourth earbud device 317 may receive the broadcast data through the fourth BIS 328. In other examples, a BIS is a one-to-many data transportation stream, such as the first BIS 322 is transmitted to the first earbud device 311 and to the third earbud device 315.

According to a packet format for LE Uncoded PHY (LE 1M and LE 2M), each packet may include four mandatory fields and one optional field. The mandatory fields include a preamble, an access address, a protocol data unit (PDU), and a cyclic redundancy check (CRC), and the optional field includes a constant tone extension (CTE).

The preamble is one octet in transmission and reception in LE 1M PHY, and two octets in transmission and reception in LE 2M PHY. The access address is four octets. The protocol data unit (PDU) ranges from 2 to 258 octets. The cyclic redundancy check (CRC) is three octets. The preamble is transmitted first, and then the access address, the PDU, the CRC, and the CTE (when present) are transmitted in order. The entire packet is transmitted at the same symbol rate (either 1 Msym/s or 2 Msym/s modulation). It takes 44 to 2128 µs to transmit the packet (when not including the CTE). When the CTE is present, the duration of the CTE is 16 to 160 µs.

All AUX_SYNC_IND, AUX_CHAIN_IND, AUX_SYNC_SUBEVENT_IND, AUX_CONNECT_REQ, and AUX_CONNECT_RSP PDUs transmitted in a periodic advertising train need to use an access address (AA) value configured in a SyncInfo field included in an AUX_ADV_IND PDU that describes the train. All AUX_SYNC_SUBEVET_RSP PDUs transmitted in a periodic advertising with responses train need to use an access address (AA) value configured in periodic advertising response timing information included in the AUX_ADV_IND PDU describing the train. In the periodic advertising with responses train, the AA value of the AUX_SYNC_SUBEVENT_RSP PDUs needs to be different from the AA value of the AUX_SYNC_SUBEVENT_IND PDUs. An AA of all other advertising physical channel packets needs to be 0b10001110 10001001 10111110 11010110 (0x8E89BED6).

Connection between two devices, a BIS of each thereof, and a periodic advertising train of each thereof are intended to have different access addresses (AAs). A link layer in an initiating state generates a new access address for each initial PDU transmitted. The link layer in an advertising state needs to generate a new access address whenever a periodic advertising train is enabled, and needs to generate a second access address for a response in periodic advertising with responses. The first address is transmitted in a SyncInfo field of a PDU referring to the periodic advertising train, and the second address is transmitted in periodic advertising response timing information relating to the train.

The link layer in an isochronous broadcasting state generates a new seed access address (SAA) for each BIG. An access address (AA) for a BIS(s) to be generated may be derived from the SAA. An access address for each BIS and a BIG control logical link in a BIG needs to be derived from an SAA for the BIG.

A periodic advertising interval is a starting interval between two AUX_SYNC_IND PDUs scheduled in the same advertising set. The periodic advertisement interval needs to be an integer multiple of 1.25 ms in a range from 7.5 ms to 81.91875 s (even though PDUs fail to be transmitted for any reason). A periodic advertising event includes an AUX_SYNC_IND PDU and a subordinate set thereof.

Two periodic advertising events for the same periodic advertising train need not to overlap each other. With periodic advertising activated, the periodic advertising interval needs not to be changed. Periodic advertising is used when advertising data needs to be transmitted regularly at regular intervals. Periodic advertising is defined in two forms: periodic advertising without responses and periodic advertising with responses. Periodic advertising without responses includes advertisements transmitted at fixed intervals where advertising data occasionally changes. AUX_SYNC_IND and AUX_CHAIN_IND PDUs included in the advertisements form a periodic advertising train. Periodic advertising with responses (PAwR) includes advertisements transmitted at fixed intervals where advertising data changes frequently and a response is transmitted. AUX_SYNC_SUBEVENT_IND and AUX_SYNC_SUBEVENT_RSP PDUs included in the advertisements form a PAwR train.

An advertising set including periodic advertising is identified by an AdvDataInfo field of an ADV_EXT_IND PDU that refers to an AUX_ADV_IND PDU including a SyncInfo field. An AUX_SYNC_IND PDU, an AUX_SYNC_SUBEVENT_IND PDU, and a PDU referring to the same always need to be transmitted to the same PHY. PHY, access address, and CRCInit values of the AUX_SYNC_IND PDU and the AUX_SYNC_SUBEVENT_IND PDU used for the periodic advertising do not change while a corresponding train is activated. Advertising referring to a periodic advertising train needs not to be anonymous. Whenever a periodic advertising train is activated, a controller needs to transmit at least one AUX_ADV_IND PDU referring to a first AUX_SYNC_IND or AUX_SYNC_SUBEVENT_IND PDU of the train, and there is no requirement as to whether or when to transmit subsequent advertising PDUs referring to the train. In periodic advertising with responses, periodic advertising response timing information needs to be included in an additional controller advertising information (ACAD) field of an AUX_ADV_IND PDU.

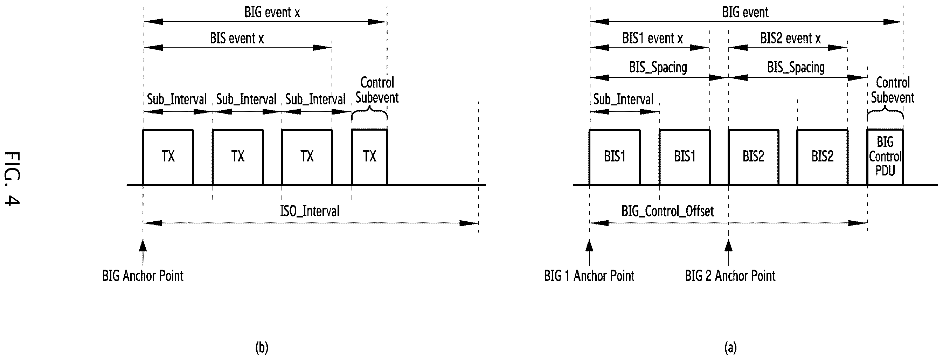

FIG. 4 illustrates a broadcast isochronous group (BIG) event and a broadcast isochronous stream (BIS) event according to an embodiment.

Referring to (a) of FIG. 4, one BIS event and a control subevent are included in a BIG event. Referring to (b) of FIG. 4, two BIS events and one control subevent may be included in a BIG event.

A BIS logical transport is used to transmit one or more isochronous data streams to a device for a BIS within a range. Data may be of fixed size or variable size, and be framed or unframed. A BIS has one or more subevents for transmitting an isochronous data packet. The BIS supports transmission of a plurality of new isochronous data packets in every BIS event. The BIS does not have an acknowledgment protocol, and traffic is transmitted unidirectionally from a broadcasting device.

The BIS logical transport has no acknowledgment, and thus has intrinsically low reliability. To improve reliability of transmission, an isochronous data packet may be unconditionally retransmitted by increasing the number of subevents in every event. Further, the packet may be transmitted at an interval shorter than an interval associated with the packet, thereby improving the reliability of transmission. This transmission is referred to as pre-transmission.

The BIS supports low energy-stream (LE-S) (unframed) or low energy-frame (LE-F) logical links, and also supports a low energy broadcast control (LEB-C) logical link. The BIS is identified by a unique access address (AA) and timing information. The access address (AA) and the timing information are transmitted in a packet transmitted using an associated periodic advertising broadcast (PADVB) logical transport. A scanning device that supports a synchronized receiver role may be synchronized with the BIS by using timing information from a periodic advertising train, and may then receive isochronous data from the BIS.

The BIS is a logical transport that allows a device to transmit isochronous data. Isochronous data may be framed or unframed. The BIS may support a variable-size packet and transmission of one or more packets in each isochronous event, thereby supporting various data rates. Data traffic is transmitted unidirectionally from the broadcasting device. Therefore, there is no acknowledgment protocol, and broadcast isochronous traffic has intrinsically low reliability. To improve reliability of packet delivery, the BIS supports multiple retransmissions.

Each broadcast isochronous stream (BIS) is part of a broadcast isochronous group (BIG). A BIG may have one or more BISs. A plurality of BISs within a BIG has a common timing reference, based on the broadcasting device, and is temporally synchronized. For example, left and right channels of an audio stereo stream received by separate devices may need to be rendered simultaneously. However, the plurality of BISs in the BIG may be scheduled in a sequential arrangement or an interleaved arrangement.

A BIG includes two or more BISs that have the same ISO_Interval and are expected to have a temporal relationship in an application layer or a single BIS. The maximum number of BISs in the BIG needs to be 31. The BIG also includes control subevents.

Each BIG may be defined by the following parameters.
- Num_BIS is the number of BISs in the BIG. Each of the BISs in the BIG is allocated a different BIS_Number from 1 to Num_BIS.
- ISO_Interval is the time in a unit of 1.25 ms between two adjacent BIG anchor points. The value ranges from 4 to 3200 (5 ms to 4 s).
- BIS_Spacing is the time between the start time of a corresponding subevent in adjacent BISs in the BIG and the start time of a first subevent of the last BIS and a control sub event.
- Sub_Interval is the time between the start points of two consecutive subevents in a BIS.
- Max_PDU is the maximum number of data octets (excluding a message integrity check (MIC)) for transmitting each BIS data PDU in the BIG. The value ranges from 1 to 251.
- Max_SDU is the maximum size of a service data unit (SDU) of the BIG. The value ranges from 1 to 4095.
- Message transfer part (MTP) needs to be the same as the time it takes to transmit a packet including a BIS data PDU along with a payload of a Max_PDU octet in a PHY used for a BIS, and S=8 is assumed in the LE Coded PHY.
- Burst number (BN), pre-transmission offset (PTO), and immediate repeat count (IRC) control what data is transmitted in each BIG event. The value of BN needs to range from 1 to 7. The value of PTO needs to range from 0 to 15. The value of IRC needs to range from 1 to 15.
- Number of subevents (NSE) is the number of subevents per BIS in each BIG event. The value needs to range from 1 to 31, and needs to be an integer multiple of BN.
- Framed indicates whether the BIG delivers framed or unframed data.
- Encrypted indicates whether the BIG is encrypted.

These parameters do not change during the lifetime of the BIG. The required range of each parameter is the entire range of valid values excluding the following parameters, and only listed values are required.
- Num_BIS: 1
- BN: 1
- NSE: All supported values of BN
- PTO: 0
- IRC: All supported values of GC

Each BIG needs to have a 39-bit counter associated therewith, bigEventCounter. This value is configured to 0 for a first BIG event in the BIG, and is increased by 1 every BIG event regardless of an isochronous broadcaster (e.g., an isochronous broadcasting device) transmitting a broadcast isochronous PDU during an event. Each BIS needs to have a 39-bit counter associated therewith, bisPayloadCounter. A link layer of a receiver synchronized with the isochronous broadcaster needs to terminate before bisPayloadCounter is 2^39-1. For reference, when a BIG event starts, all BISs in a BIG have the same value for bisPayloadCounter, and bigEventCounter * BN = bisPayloadCounter.

A BIS event includes one or more BIS PDUs. A link layer transmits a BIS PDU only in a BIG event. The link layer transmits only the BIS PDU as part of the BIG event. Each BIG event is divided into BIS events divided by Num_BIS and a control subevent. Each BIS event is divided into NSE sub-events. Each BIS event starts at a moment called a BIS anchor point, and ends after the last subevent. Each BIG event starts at a moment called a BIG anchor point, and ends after a control subevent if present, or at the last constituent BIS event otherwise. BIG anchor points need to be spaced apart regularly at an interval of ISO_Interval. BIS anchor points for BIS n of a BIG need to be (n - 1) * BIS_Spacing after a BIG anchor point, and are regularly spaced apart at the interval of ISO_Interval. Subevents of each BIS need to be spaced apart at Sub_Interval. The isochronous broadcaster needs to terminate a BIG event at least before time for inter frame space (T_IFS) of a BIG anchor point of the next BIG event.

Each BIG event may include a control subevent. When a control subevent starts, the link layer transmits a single BIG control PDU to transmit control information about a BIG. The link layer does not transmit the BIG control PDU in other times. The time from a BIG anchor point specified by BIG_Control_Offset to the start of the control subevent is as follows.

BIG_Control_Offset = Num_BIS * BIS_Spacing for Sequential Arrangement

BIG_Control_Offset = NSE * Sub _Intervalforinterleaved

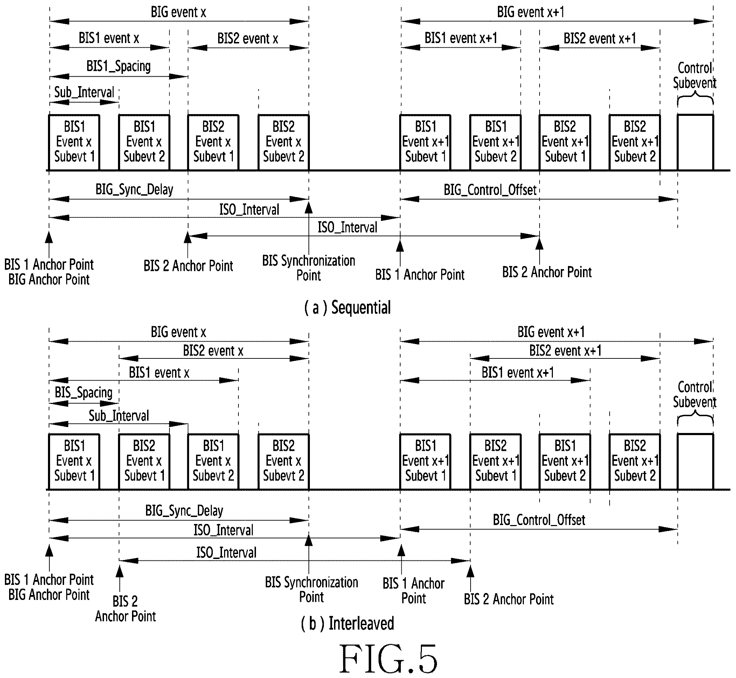

FIG. 5 illustrates a sequential arrangement and interleaved arrangement of BISs according to an embodiment.

FIG. 5 shows arrangements for a BIG where Num_BIS=2 and NSE=2. Here, (a) shows a sequential arrangement, and (b) shows an interleaved arrangement.

BISs in the BIG are arranged sequentially or interleaved by appropriately configuring the values of parameters Sub_Interval and BIS_Spacing. In the sequential arrangement, since BIS_Spacing needs to be NSE * Sub_Interval or greater, all subevents of a BIS event occur together. In the interleaved arrangement, Sub_Interval needs to be Num_BIS * BIS_Spacing, and thus first subevents of all BISs are adjacent, and second subevents of all BISs are adjacent. In each case, a minimum value for BIS_Spacing needs to be used.

A maximum possible length for a data portion of a BIG event (excluding a control subevent) is denoted by BIG_Sync_Delay. The value of BIG_Sync_Delay needs to be equal to the time from an anchor point to a BIG synchronization point, which is the end of a packet including a payload of a Max_PDU octet transmitted in the last subevent. Therefore, BIG_Sync_Delay is equal to (Num_BIS - 1) * BIS_Spacing + (NSE - 1) * Sub_Interval + MPT.

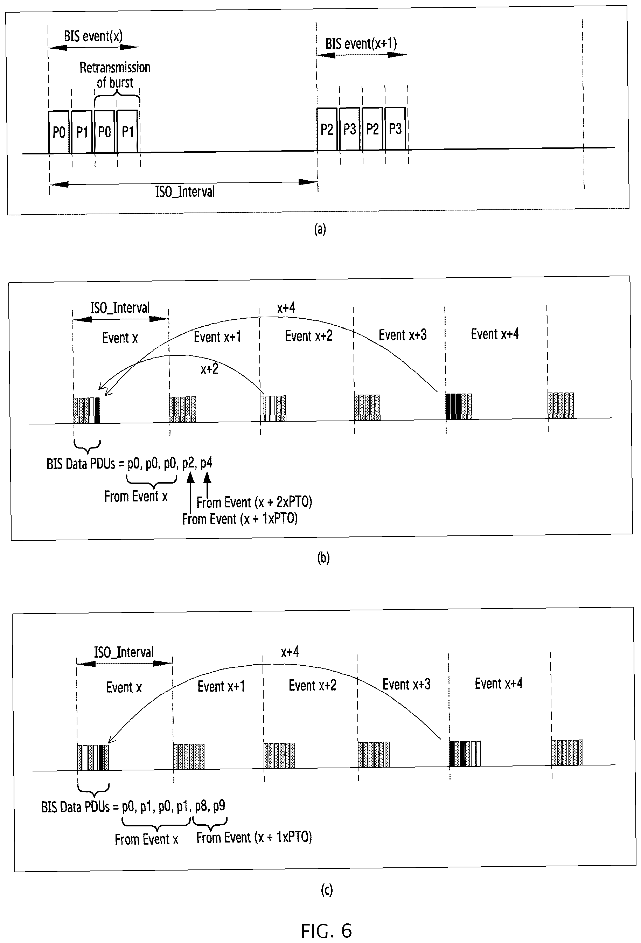

FIG. 6 illustrates allocation of payloads of a BIS according to an embodiment.

Referring to FIG. 6, (a) shows BIS payload allocation where BN = 2, IRC = 2, PTO = 0, and NSE = 4, (b) shows BIS payload allocation where BN = 1, IRC = 3, PTO = 2, and NSE = 5, and (c) shows BIS payload allocation where BN = 2, IRC = 2, PTO = 4, and NSE = 6.

A BIS subevent is an opportunity in which an isochronous broadcaster (e.g., an isochronous broadcasting device) transmits a broadcast isochronous BIS PDU and a synchronized receiver receives the broadcast isochronous BIS PDU. For example, a link layer needs to transmit one BIS data PDU at the starting time of each subevent of an isochronous broadcasting event, for example, unless there is a scheduling conflict. Alternatively, the link layer needs to transmit at least one BIS data PDU within six consecutive BIS events.

Even though failing to transmit a BIS data PDU, the link layer needs to operate as if all other purposes (e.g., packet timing and payload selection) have been completed. In each BIS event, a data source needs to supply a data burst including a burst number (BN) payload, and each data needs to include a single fragment or one or more SDU segments. The data burst is associated with the corresponding BIS event, but may also be transmitted in an earlier event. PDUs including a given payload have the same logical link identifier (LLID) value, but may have different control subevent sequence numbers (CSSNs) and control subevent sequence transmission flags (CSTFs). For reference, the data burst associated with the BIS event includes a payload of bisPayloadCounter between bigEventCounter * BN and (bigEventCounter + 1) * BN - 1.

Subevents of each BIS event are divided into groups of BN subevents. Therefore, a group count (GC) group is CG = NSE / BN. An immediate repetition count (IRC) specifies the number of groups carrying data related to the current BIS event. The remaining group carries data related to a future BIS event specified by a pre-transmission offset (PTO). The IRC needs to be greater than 0 and not greater than a GC. When IRC = GC, the PTO needs to be ignored. Otherwise, the PTO needs to be greater than 0. The groups of subevents are numbered sequentially using g from 0 to GC - 1.
- When g < IRC, group g needs to include data related to the current BIS event.
- When g >= IRC, group g needs to include data related to a future BIS event of a PTO * (g - IRC + 1) BIS event after the current BIS event.

A payload of each data burst always needs to be transmitted in the same order. For reference, configuring the GC to a value greater than 1 provides repeated transmission to compensate for the lack of an acknowledgment when performing a broadcast, while configuring the PTO to a value other than 0 (e.g., pre_transmission) provides great time diversity for repeated copying of data.

The link layer configures a CSTF bit to 1 in a header of all BIS data PDUs transmitted in a BIG event when scheduling a BIG control PDU to be transmitted in the BIG event, configures the CSTF bit to 0 otherwise, and configures the CSTF bit to 0 in a header of all BIG control PDUs. The CSSN values of all BIS PDUs in the BIG event need to be the same. The link layer increases a CSSN by 1 when a BIG event including initial transmission of a new BIG control PDU starts, and needs not to change the CSSN (e.g., when a BIG control PDU is being retransmitted or is not scheduled to be transmitted). For reference, the synchronized receiver may determine by using a CSSN that a BIG control PDU is a retransmission of a PDU already received.

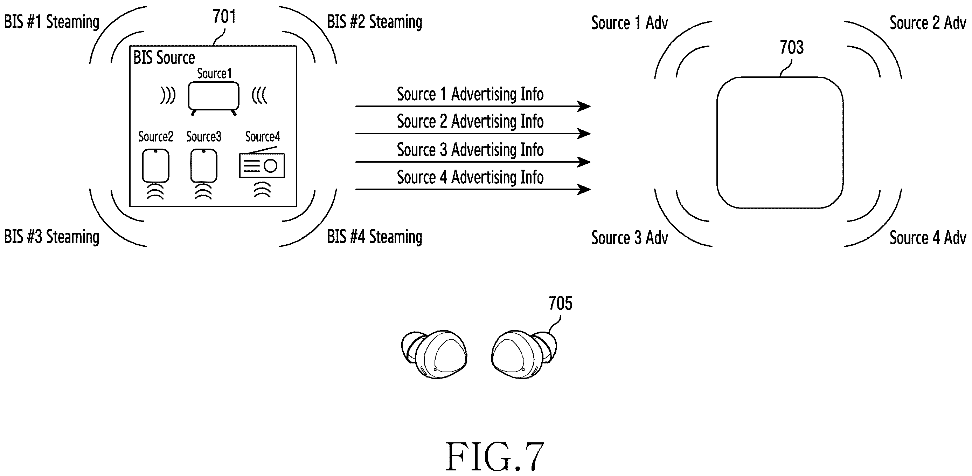

FIG. 7 illustrates an operation of assisting in an advertising signal transmission for a BIS service according to an embodiment.

Referring to FIG. 7, an electronic device 701 may transmit information about an advertising signal including information related to a BIS service to a first external electronic device 703. The first external electronic device 703 receiving the advertising signal may broadcast the advertising signal instead of the electronic device 701, and a second external electronic device 705 may perform synchronization with the electronic device 701, based on the advertising signal broadcast by the first external electronic device 703, to receive data.

The electronic device 701 is a BIS source device that provides a broadcast isochronous stream (BIS) service, and may be, for example, a portable communication device (e.g., a smartphone), a computer device, a portable multimedia device, a portable medical device, a camera, a wearable device, or a home appliance (e.g., TV and audio). The electronic device 701 may be the electronic device 101 of FIG. 1 and/or the electronic device 201 of FIG. 2. Further, the electronic device 701 may be a device that streams audio by forming a broadcast isochronous group (BIG), or a device that an electronic device (e.g., a true wireless (TW) device and a headset) acting as a sink device autonomously becomes a BIS source device and transmits audio data to devices participating in the same BIG. However, the electronic device 701 may include various electronic devices, without being limited to the foregoing examples.

The first external electronic device 703 is a device that broadcasts an advertising signal instead of the electronic device 701, and may be, for example, a portable communication device (e.g., a smartphone), a portable multimedia device, a wearable device, a tablet PC, a smartwatch, a smart things station, a dongle, a cradle for the electronic device 701, or a cradle for the second external electronic device 705. Further, the first external electronic device 703 may be a device acting as a BIS assistant, for example, a smartphone, a Bluetooth device that simply forms a communication link, one side of a true wireless stereo (TWS) device, a cradle for a TWS device, or a hub device to assist BIS source devices in the same space in transmitting an advertising signal. However, the first external electronic device 703 may include various electronic devices, without being limited to the foregoing examples.

The second external electro7nic device 705 is a BIS sink device that receives a BIS service, and may include a true wireless (TW) device, wireless earbuds, a Bluetooth speaker, or a headset. The second external electronic device 705 may be the electronic device 102 or 104 of FIG. 1. Further, the second external electronic device 705 may be a device that functions as a BIS assistant. However, the second external electronic device 705 may include various electronic devices, without being limited to the foregoing examples.

In an embodiment, the electronic device 701 broadcasts an advertising signal including information about data (e.g., audio data) to be broadcast, and performs BIS streaming, based on BIG information included in the advertising signal. The advertising signal is a signal for synchronization of the BIS service, and may include an extended advertising (EA) signal and/or a periodic advertising (PA) signal. In an embodiment of the disclosure, transmission of an advertising signal may refer to broadcast of the advertising signal. For example, transmission of an extended advertising (EA) signal and/or a periodic advertising (PA) signal may refer to broadcast of the EA signal and/or PA signal.

The electronic device 701 broadcasts the EA signal every advertising interval to provide the BIS service. The electronic device 701 needs to broadcast the PA signal according to a fixed period indicated by PA synchronization information included in an additional controller advertising information (ACAD) field of an EA packet, and needs to broadcast data (e.g., sound source data) via a BIS channel in a BIG every ISO interval.

Since a BIS operates as a one-way broadcast channel, there is no acknowledgment operation with respect to data transmission. Thus, it is needed to prevent the second external electronic device 705 to receive the data from missing the BIS data by transmitting the data by optimally using the number of subevents (NSE) allocated to the BIS channel within the given BIG group. When the BIS event period overlaps an EA signal transmission period and/or a PA signal transmission period within the ISO interval, the advertising signal may fail to be broadcast.

Further, since the electronic device 701 may be connected to other devices or other Bluetooth operations may be scheduled, the electronic device 701 may not broadcast the EA signal in the configured advertising interval or may not broadcast the PA signal according to the fixed period indicated by the PA synchronization information. In particular, for the EA signal, the configured interval may be dynamically adjusted by a host depending on implementation of a Bluetooth controller (BT controller), but for the PA signal, the fixed period indicated by the PA synchronization information definitely needs to be followed. Therefore, when broadcast is not possible due to other tasks in the fixed period indicated by the PA synchronization information, the PA signal may be broadcast only in the next period or the period after that.

The second external electronic device 705 may receive the PA signal, may obtain BIG synchronization information, and may synchronize with the BIS channel, based on the BIG synchronization information, thereby receiving the data (e.g., the sound source data) transmitted by the electronic device 701. Here, the second external electronic device 705 may obtain PA information through LL_PERIODIC_SYNC_IND from a BIS assistant device (e.g., the first external electronic device 703), and may receive PA broadcast by the electronic device 701, based on the PA information. Specifically, the second external electronic device 705 may obtain the PA synchronization information through LL_PERIODIC_SYNC_IND, and may receive the PA broadcast by the electronic device 701, based on the PA synchronization information. As described above, when the electronic device 701 fails to broadcast the advertising signal due to other internal scheduling or the second external electronic device 705 fails to receive the advertising signal due to the impact of the usage environment thereof and thus synchronization with the BIS channel is delayed, it may take a long time for a user of the second external electronic device 705 to hear the sound source, and when the synchronization is not achieved within the time of a configured timeout, a PA timeout may also occur.

In an embodiment of the disclosure, the first external electronic device 703 may assist transmission of the advertising signal performed by the electronic device 701 to broadcast the advertising signal. The second external electronic device 705 may receive the advertising signal broadcast by the first external electronic device 703, thereby being synchronized with the BIS channel of the electronic device 701.

Referring to FIG. 7, the electronic device 701 operates as a BIS source device that provides a BIS service. When there is a plurality of source devices (source 1, source 2, source 3, and source 4), the plurality of source devices (source 1, source 2, source 3, and source 4) may each separately perform BIS streaming. One source device may generate a plurality of BISs and form one BIG, thereby transmitting the synchronized BISs. The BISs may be broadcast. In an embodiment of the disclosure, transmission of a broadcast isochronous stream (BIS) may refer to broadcast of the BIS. Here, broadcast of the BIS may refer to transmitting or broadcasting data, based on the BIS. Specifically, broadcast of the BIS may refer to transmitting or broadcasting a BIS packet, a BIS protocol data unit (PDU), data, sound source data, and the like through the BIS.

The electronic device 701 that provides the BIS service needs to broadcast an advertising signal for synchronization of the second external electronic device 705. However, the electronic device 701 may request the first external electronic device 703 to assist in transmitting the advertising signal for the BIS service for various reasons, such as limited radio resources, scheduling constraints in the electronic device 701, or fast synchronization. For example, the electronic device 701 may request the first external electronic device 703 to broadcast the advertising signal instead of the electronic device 701. In an embodiment, the electronic device 701 may transmit advertising information to the first external electronic device 703 to assist in transmitting the advertising signal. When there is the plurality of source devices (source 1, source 2, source 3, and source 4), the plurality of source devices (source 1, source 2, source 3, and source 4) may each separately transmit advertising information (source 1 advertising information, source 2 advertising information, source 3 advertising information, and source 4 advertising information) to the first external electronic device 703.

In an embodiment, the first external electronic device 703 having received the advertising information from the electronic device 701 may broadcast the advertising signal that the electronic device 701 needs to broadcast instead, based on the advertising information. When there is the plurality of source devices (source 1, source 2, source 3, and source 4), the first external electronic device 703 may broadcast an advertising signal (source 1 advertising, source 2 advertising, source 3 advertising, and source 4 advertising) that each source device needs to broadcast. The first external electronic device 703 may separately broadcast the advertising signal for each source device, or may form a BIG to broadcast an advertising signal for synchronized BISs.

The second external electronic device 705 may receive the advertising signal broadcast by the first external electronic device 703, may obtain synchronization information, and may perform synchronization with the BIS channel broadcast by the electronic device 701. Subsequently, the second external electronic device 705 may receive a BIS from the electronic device 701, and may play audio data. In an embodiment, there may be a plurality of second external electronic devices 705. Here, the plurality of second external electronic devices 705 may receive the same BIS or different BISs.

According to an embodiment, the first external electronic device 703 may assist transmission of the advertising signal performed by the electronic device 701, thereby flexibly managing resources of the electronic device 701 and providing fast BIS synchronization for the second external electronic device 705 to improve audio quality.

Although FIG. 7 illustrates an operation for four source devices, the number of source devices may vary without being limited thereto. For example, there may be fewer or more than four source devices.

Hereinafter, a method and a device for assisting in the advertising signal transmission for a BIS service according to an embodiment will be described in more detail.

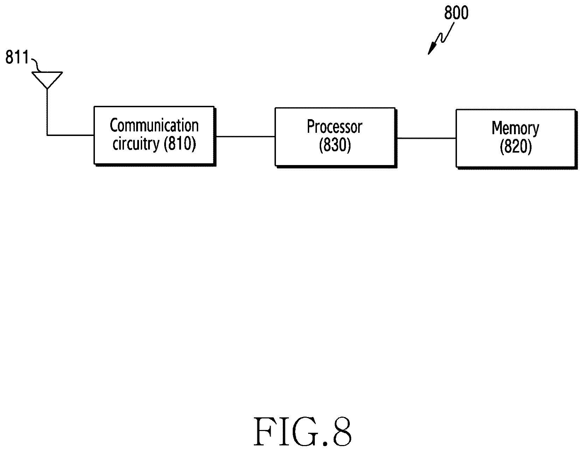

FIG. 8 is a block diagram simply illustrating the configuration of an electronic device according to an embodiment.

Referring to FIG. 8, the electronic device 800 according to an embodiment of the disclosure may include a communication circuitry 810, an antenna module 811, a memory 820, and a processor 830. However, the electronic device 800 is not limited to the foregoing configuration, but may include only some of the foregoing components of FIG. 8 or include at least one or more other components (e.g., the input module 150 and the display module 160 of FIG. 1) in addition to the foregoing components. In an embodiment, the electronic device 800 may be the electronic device 101 of FIG. 1, the electronic device 201 of FIG. 2, and/or the electronic device 701 of FIG. 7. The electronic device 800 of FIG. 8 may include a component the same as or similar to at least one of the components (e.g., modules) of the electronic device 101 of FIG. 1. Accordingly, the communication circuitry 810 may correspond to the communication module 190 or the wireless communication module 192 of FIG. 1, and the antenna module 811 may correspond to the antenna module 197 of FIG. 1. The memory 810 and the processor 830 may correspond to the memory 130 and the processor 120 of FIG. 1, and when the electronic device 800 further includes another component, the other component may also correspond to a component of FIG. 1.

The communication circuitry 810 may support wireless communication between the electronic device 800 and an external electronic device. For example, the communication circuitry 810 may transmit and receive s signal and/or data to and from a first external electronic device or a second external electronic device by using a frequency band supported by the wireless communication according to a specified wireless communication protocol. In an embodiment, the communication circuitry 810 may communicate with the external electronic device via a short-range wireless communication network, such as ultra-wideband (UWB), Bluetooth, Bluetooth Low Energy, wireless fidelity (Wi-Fi) direct, or infrared data association (IrDA). In an embodiment, the communication circuitry 810 may include a module for Bluetooth legacy communication and/or BLE communication as a wireless communication module. The communication circuitry 810 may operate independently of the processor 830, and may include one or more communication processors that support wireless communications. In an embodiment, the communication circuitry 810 may also be referred to as a communication interface or a communication module.

The antenna module 811 may include a plurality of antennas, and at least one antenna suitable for a communication method used in a communication network (e.g., the first network 198 of FIG. 1) may be selected from among the plurality of antennas by the communication circuitry 810.

The memory 820 may store various pieces of information for an operation of the electronic device 800. The information stored in the memory 820 may include, for example, software and input data or output data about a command related to the software. In an embodiment, the information stored in the memory 820 may include at least one instruction for an operation of assisting in the advertising signal transmission for a BIS service. The instruction may correspond to the program 140 of FIG. 1. The instruction may be executed through the processor 830, and the electronic device 800 may perform operations according to an embodiment of the disclosure by the processor 830 executing instructions. The memory 820 may include a volatile memory or a nonvolatile memory.

The processor 830 may control at least one other component (e.g., a hardware or software component) of the electronic device 800, and may perform various types of data processing or arithmetic operations. As at least part of the data processing or operations, the processor 830 may load a command or data received from another component (e.g., the communication circuitry 810) into the memory 820, may process the command or data stored in the memory 820, and may store the resulting data in the memory 820. In an embodiment, the processor 830 may execute the least one instruction for the operation of assisting in transmitting the advertising signal for the BIS service stored in the memory 820.

In an embodiment, the processor 830 may be configured to transmit a request for assistance in an advertising signal transmission for a broadcast isochronous stream (BIS) service to the first external electronic device, transmit information on the advertising signal including information related to the BIS service to the first external electronic device, perform a negotiation with the first external electronic device for the assistance in the advertising signal transmission, based on the information on the advertising signal, and transmit information related to the assistance in the advertising signal transmission to the first external electronic device, based on the negotiation result. The information related to the BIS service may include at least one of extended advertising (EA) information, periodic advertising (PA) information, or broadcast isochronous group (BIG) synchronization information. The information related to the assistance in the advertising signal transmission may include time information for starting the assistance in the advertising signal transmission. The processor 830 may be further configured to broadcast at least one BIS for at least one second external device.

In an embodiment, the processor 830 may be further configured to determine whether the assistance in the advertising signal transmission is necessary, based on at least one of an external input, an available radio resource, and a radio frequency (RF) environment, while performing the BIS service. When performing the negotiation with the first external electronic device for the assistance in the advertising signal transmission, the processor 830 may be configured to negotiate for at least one of the type of the advertising signal, assistance time, and an assistance type for the assistance in the advertising signal transmission. The type of the advertising signal may include an EA signal and a PA signal, and the assistance time may include at least part of a BIS service period, a period determined by a preset algorithm, and a period in which the electronic device is unable to broadcast the advertising signal. The assistance type may include a first assistance type which the first external electronic device broadcasts at least one of an EA signal and a PA signal that are the same as an EA signal and a PA signal of the electronic device and a second assistance type which the first external electronic device generates and broadcasts an independent PA signal including BIG synchronization information that is the same as BIG synchronization information included in the PA signal of the electronic device and an independent EA signal including PA information (e.g., PA synchronization information) to synchronize with the PA signal.

In an embodiment, the processor 830 may be further configured to broadcast the advertising signal, based on at least one of an external input, a determination as to whether a predetermined condition is satisfied, and a notification from the first external electronic device. When there is a plurality of first external electronic devices, the processor 830 may be configured to negotiate for assistance in an advertising signal transmission with each of the first external electronic devices.

When the electronic device 800 and the first external electronic device are related with the same account, the processor 830 may be further configured to negotiate with the first external electronic device for the assistance in the advertising signal transmission through a server, and enable the electronic device 800 to broadcast the advertising signal for a predetermined time, based on a negotiation result. Here, the information related to the assistance in the advertising signal transmission may not be transmitted to the first external electronic device, and the electronic device 800 and the first external electronic device may be registered with the same account in the server. In an embodiment, the processor 830 may be configured to receive advertising signal transmission assistance capability information about at least one first external electronic device from the server through the communication circuitry 810, trigger an advertising signal transmission assistance operation, transmit the information on the advertising signal including the information related to the BIS service to the server, negotiate with the server for assistance in an advertising signal transmission, select an assistant device, and broadcast the advertising signal for a predetermined time, based on a negotiation result, before a first external electronic device selected as the assistant device performs the assistance in the advertising signal transmission.

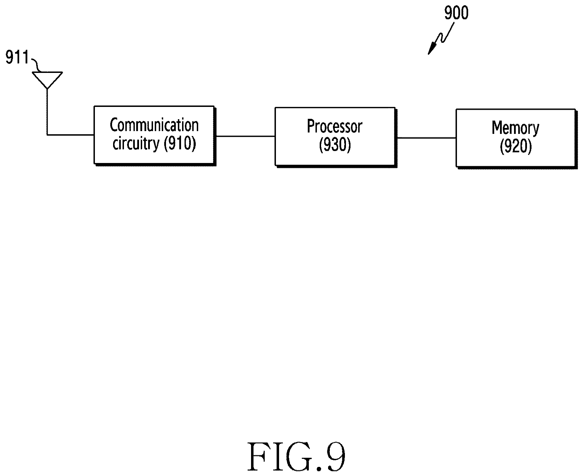

FIG. 9 is a block diagram simply illustrating the configuration of a first external electronic device according to an embodiment.

Referring to FIG. 9, the first external electronic device 900 according to an embodiment of the disclosure may include a communication circuitry 910, an antenna module 911, a memory 920, and a processor 930. However, the first external electronic device 900 is not limited to the foregoing configuration, but may include only some of the foregoing components of FIG. 9 or include at least one or more other components in addition to the foregoing components. In an embodiment, the first external electronic device 900 of FIG. 9 may include a component the same as or similar to at least one of the components (e.g., modules) of the electronic device 101 of FIG. 1.

The communication circuitry 910 may support wireless communication between the first external electronic device 900 and the electronic device 800 and/or a second external electronic device. For example, the communication circuitry 910 may transmit and receive s signal and/or data to and from the electronic device or the second external electronic device by using a frequency band supported by the wireless communication according to a specified wireless communication protocol. In an embodiment, the communication circuitry 910 may communicate with the external electronic device via a short-range wireless communication network, such as ultra-wideband (UWB), Bluetooth, Bluetooth Low Energy, wireless fidelity (Wi-Fi) direct, or infrared data association (IrDA). In an embodiment, the communication circuitry 910 may include a module for Bluetooth legacy communication and/or BLE communication as a wireless communication module. The communication circuitry 910 may operate independently of the processor 930, and may include one or more communication processors that support wireless communications. In an embodiment, the communication circuitry 910 may also be referred to as a communication interface or a communication module.

The antenna module 911 may include a plurality of antennas, and at least one antenna suitable for a communication method used in a communication network (e.g., the first network 198 of FIG. 1) may be selected from among the plurality of antennas by the communication circuitry 910.

The memory 920 may store various pieces of information for an operation of the first external electronic device 900. The information stored in the memory 920 may include, for example, software and input data or output data about a command related to the software. In an embodiment, the information stored in the memory 920 may include at least one instruction for an operation of assisting in the advertising signal transmission for a BIS service. The instruction may correspond to the program 140 of FIG. 1. The instruction may be executed through the processor 930, and the first external electronic device 900 may perform operations according to an embodiment of the disclosure by the processor 930 executing instructions. The memory 920 may include a volatile memory or a nonvolatile memory.

The processor 930 may control at least one other component (e.g., a hardware or software component) of the first external electronic device 900, and may perform various types of data processing or arithmetic operations. As at least part of the data processing or operations, the processor 930 may load a command or data received from another component (e.g., the communication circuitry 910) into the memory 920, may process the command or data stored in the memory 920, and may store the resulting data in the memory 920. In an embodiment, the processor 930 may execute the least one instruction for the operation of assisting in transmitting the advertising signal for the BIS service stored in the memory 920.

In an embodiment, the processor 930 may be configured to receive a request for assistance in an advertising signal transmission for a BIS service from the electronic device 800, receive information on the advertising signal including information related to the BIS service from the electronic device 800, perform a negotiation with the electronic device 800 for the assistance in the advertising signal transmission, based on the information on the advertising signal, receive information related to the assistance in the advertising signal transmission from the electronic device 800, based on a negotiation result, and broadcast the advertising signal. The information related to the BIS service may include at least one of extended advertising (EA) information, periodic advertising (PA) information, or broadcast isochronous group (BIG) synchronization information. The information related to the assistance in the advertising signal transmission may include time information for starting the assistance in the advertising signal transmission.

In an embodiment, when performing the negotiation with the electronic device 800 for the assistance in the advertising signal transmission, the processor 930 may be configured to negotiate for at least one of the type of the advertising signal, assistance time, and an assistance type for the assistance in the advertising signal transmission. The type of the advertising signal may include an EA signal and a PA signal, and the assistance time may include at least part of a BIS service period, a period determined by a preset algorithm, and a period in which the electronic device is unable to broadcast the advertising signal. The assistance type may include a first assistance type which the first external electronic device broadcasts at least one of an EA signal and a PA signal that are the same as an EA signal and a PA signal of the electronic device and a second assistance type which the first external electronic device generates and broadcasts an independent PA signal including BIG synchronization information that is the same as BIG synchronization information included in the PA signal of the electronic device and an independent EA signal including PA information (e.g., PA synchronization information) to synchronize with the PA signal.

In an embodiment, when there is a plurality of electronic devices 800, the processor 930 may be configured to negotiate for assistance in an advertising signal transmission with each of the electronic devices. In an embodiment, the processor 930 may be further configured to broadcast at least one BIS for at least one second external device.

When the electronic device 800 and the first external electronic device 900 are related with the same account, the processor 930 may be further configured to negotiate with the electronic device 800 for the assistance in the advertising signal transmission through a server, and enable the electronic device 800 to broadcast the advertising signal for a predetermined time, based on a negotiation result. Here, the information related to the assistance in the advertising signal transmission may not be received from the electronic device 800, and the electronic device 800 and the first external electronic device 900 may be registered with the same account in the server. In an embodiment, the processor 930 may be configured to transmit advertising signal transmission assistance capability information to the server through the communication circuitry 910, receive the information on the advertising signal including the information related to the BIS service from the server, receive the result of negotiation with the electronic device 800 from the server, and broadcast the advertising signal.

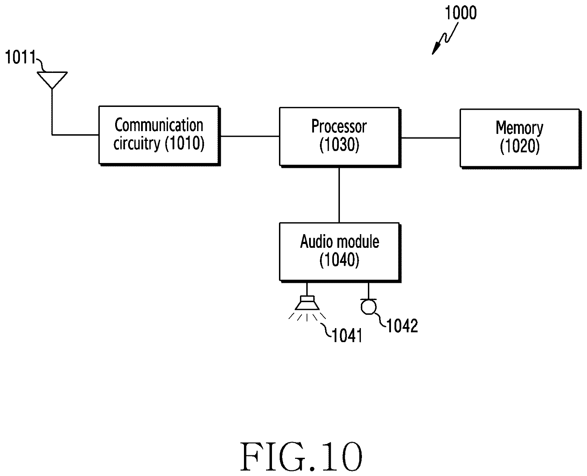

FIG. 10 is a block diagram simply illustrating the configuration of a second external electronic device according to an embodiment.

The second external electronic device 1000 (e.g., external electronic device #1 202 and external electronic device #2 204 of FIG. 2) according to an embodiment of the disclosure may perform communication with the electronic device 800 and/or the first external electronic device 900 by using various communication methods (e.g., Bluetooth, Bluetooth Low Energy (BLE), or Wi-Fi), may receive a signal and/or data from the electronic device 800 and/or the first external electronic device 900, and may process the received signal and/or data.

Referring to FIG. 10, the second external electronic device 1000 according to an embodiment of the disclosure may include a communication circuitry 1010, at least one antenna module 1011, a memory 1020, a processor 1030, an audio module 1040, a speaker 1041, or a microphone 1042. However, the second external electronic device 1000 is not limited to the foregoing configuration, but may include only some of the foregoing components of FIG. 10 or include at least one or more other components in addition to the foregoing components. According to an embodiment, at least some of the components may be configured as a single integrated circuit.

The communication circuitry 1010 may support wireless communication between the second external electronic device 1000 and the electronic device 800 and/or the first external electronic device 900. For example, the communication circuitry 1010 may transmit and receive s signal and/or data to and from the electronic device 800 and/or the first external electronic device 900 by using a frequency band supported by the wireless communication according to a specified wireless communication protocol. In an embodiment, the communication circuitry 1010 may communicate with an external electronic device via a short-range wireless communication network, such as ultra-wideband (UWB), Bluetooth, Bluetooth Low Energy, wireless fidelity (Wi-Fi) direct, or infrared data association (IrDA). In an embodiment, the communication circuitry 1010 may include a module for Bluetooth legacy communication and/or BLE communication as a wireless communication module. The communication circuitry 1010 may operate independently of the processor 1030, and may include one or more communication processors that support wireless communications. In an embodiment, the communication circuitry 1010 may also be referred to as a communication interface or a communication module.

The antenna module 1011 may include a plurality of antennas, and at least one antenna suitable for a communication method used in a communication network (e.g., the first network 198 of FIG. 1) may be selected from among the plurality of antennas by the communication circuitry 1010.

The processor 1030 may control at least one other component (e.g., a hardware or software component) of the second external electronic device 1000, and may perform various types of data processing or arithmetic operations. As at least part of the data processing or operations, the processor 1030 may load a command or data received from another component (e.g., the communication circuitry 1010) into the memory 1020, may process the command or data stored in the memory 1020, and may store the resulting data in the memory 1020. In an embodiment, the processor 1030 may execute the least one instruction to receive a BIS in the memory 1020.

In an embodiment, the processor 1030 may start performing a scan operation to retrieve a neighboring Bluetooth device, based on BLE through the communication circuitry 1010. The processor 1030 may receive an advertising signal broadcast by a neighboring Bluetooth device, based on BLE through the communication circuitry 1010. In an embodiment, the processor 1030 may receive an EA signal including ADV_EXT_IND and AUX_ADV_IND information through the communication circuitry 1010, may receive a PA signal including AUX_SYNC_IND information, based on the EA signal, may obtain BIG synchronization information, based on the PA signal, and may synchronize with a BIS channel, based on the BIG synchronization information, thereby receiving data (e.g., sound source data) transmitted by the electronic device 800.

The audio module 1040 may convert a sound into an electrical signal or, on the contrary, convert an electrical signal into a sound. The speaker 1041 may output, for example, an audio signal to the outside of the second external electronic device 1000. A sound or sound waves, such as a voice, may flow into the microphone 1042 through a microphone hole, and the microphone 1042 may generate an electrical signal corresponding thereto. The audio module 1040 may obtain a sound through the microphone 1042, or may output a sound through the speaker 1041. For example, the audio module 1040 may include an audio decoder, a digital-to-analog converter (D/A converter), or an analog-to-digital converter (A/D converter). The audio decoder may convert audio data stored in the memory 1020 into a digital audio signal. The D/A converter may convert the digital audio signal converted by the audio decoder into an analog audio signal. The speaker 1041 may output the analog audio signal converted by the D/A converter. The A/D converter may convert an analog audio signal obtained by the microphone 1042 into a digital audio signal.

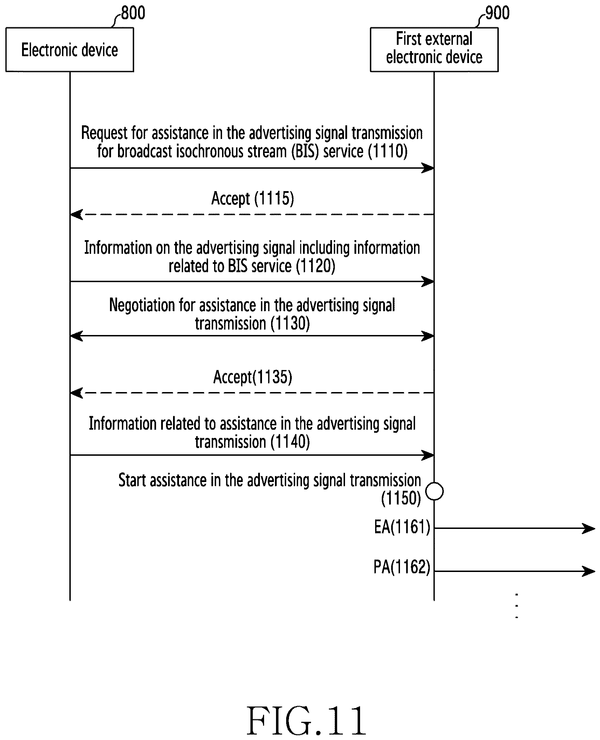

FIG. 11 is a flowchart illustrating an operating method for assisting in an advertising signal transmission for a BIS service according to an embodiment.

Referring to FIG. 11, in operation 1110, an electronic device 800 may transmit a request for assistance in an advertising signal transmission for a broadcast isochronous stream (BIS) service to a first external electronic device. In an embodiment, the electronic device 800 may determine whether the assistance in the advertising signal transmission is necessary, based on at least one of an external input, an available radio resource, and a radio frequency (RF) environment, while or even before performing the BIS service. For example, the electronic device 800 may determine whether the assistance in the advertising signal transmission is necessary, based on at least one of a user input, a preset policy for a radio resource, external interference or noise, or scheduling of the electronic device 800. For example, the electronic device 800 may determine that the assistance in the advertising signal transmission is necessary when receiving a user input while generating a BIG or during a BIS service-related operation by generating a BIG, when the BIS service overlaps with the schedules of other BT tasks, such as an LE scan, paging, inquiry, or an inquiry scan, when external LE or a basic rate (BR)/enhanced data rate (EDR) link is generated and a corresponding operation period overlaps with the broadcast time of an EA signal and/or PA signal or there is a need to prepare for a case where the operation period overlaps the broadcast time of the EA signal and/or PA signal, when the battery level of the electronic device 800 is lower than a predetermined value, or when broadcast is impossible in some periods due to coexistence (COEX) of Wi-Fi. When determining that the assistance in the advertising signal transmission is necessary, the electronic device 800 may perform operation 1110.

In an embodiment, the advertising signal is a signal for synchronization of the BIS service, and may include an extended advertising (EA) signal and/or a periodic advertising (PA) signal. The electronic device 800 may request the assistance in the advertising signal transmission for the entire period or a partial period of the EA signal and/or PA signal.

In an embodiment, the electronic device 800 may establish an external link with the first external electronic device 900 through a physical channel, such as LE, BR/EDR link, or Wi-Fi, and may communicate with the first external electronic device 900 through the established external link.

In operation 1115, the first external electronic device 900 may transmit an acceptance message in response to the request 1110 for the assistance in the advertising signal transmission for the BIS service to the electronic device 800. In an embodiment, operation 1115 may be omitted.

In operation 1120, the electronic device 800 may transmit information on the advertising signal including information related to the BIS service to the first external electronic device 900. The electronic device 800 may transmit information necessary for the first external electronic device 900 to broadcast the advertising signal instead to the first external electronic device 900. In an embodiment, the information on the advertising signal may include at least one of the information related to the BIS service, extended advertising (EA) information, periodic advertising (PA) information, or broadcast isochronous group (BIG) synchronization information. Specifically, the information on the advertising signal may include ADV_EXT_IND and AUX_ADV_IND information of the EA signal and/or AUX_SYNC_IND information of the PA signal.

In an embodiment, operation 1115 may be omitted, and operation 1110 and operation 1120 may be performed as a single operation. For example, the electronic device 800 may transmit the information on the advertising signal including the information related to the BIS service along with the request for the assistance in the advertising signal transmission for the BIS service to the first external electronic device 900.

In operation 1130, the electronic device 800 may perform a negotiation for the assistance in the advertising signal transmission with the first external electronic device 900, based on the information on the advertising signal. In an embodiment, the electronic device 800 may negotiate with the first external electronic device 900 for at least one of the type of the advertising signal, assistance time, and an assistance type for the assistance in the advertising signal transmission. The type of the advertising signal may include an EA signal and a PA signal, the assistance time may include at least part of a BIS service period, a period determined by a preset algorithm, and a period in which the electronic device is unable to broadcast the advertising signal, and the assistance type may include a first assistance type which the first external electronic device 900 broadcasts at least one of an EA signal and a PA signal that are the same as the EA signal and the PA signal of the electronic device 800 and a second assistance type which the first external electronic device 900 generates and broadcasts at least one of an EA signal and a PA signal including BIG synchronization information that is the same as the BIG synchronization information included in the EA signal and the PA signal of the electronic device 800.

In an embodiment, the negotiation for the assistance in the advertising signal transmission between the electronic device 800 and the first external electronic device 900 may be a type which the electronic device 800 first transmits necessary operations to the first external electronic device 900 and the first external electronic device 900 accepts possible operations, a type which the first external electronic device 900 first transmits possible operations to the electronic device 800 and the electronic device 800 transmits necessary operations, or a type which the electronic device 800 and the first external electronic device 900 exchange necessary operations and possible operations and select overlapping operations. However, the foregoing examples of the negotiation are only for illustration, and the electronic device 800 may negotiate with the first external electronic device 900 in various types without being limited thereto.

In an embodiment, when there is a plurality of first external electronic devices 900, the electronic device 800 may negotiate the assistance in the advertising signal transmission with each of the first external electronic devices 900.

In operation 1135, the first external electronic device 900 may receive an acceptance message regarding the result of the negotiation for the assistance in the advertising signal transmission from the electronic device 800. In an embodiment, operation 1135 may be omitted.

In operation 1140, the electronic device 800 may transmit information related to the assistance in the advertising signal transmission to the first external electronic device 900. In an embodiment, the information related to the assistance in the advertising signal transmission may include time information for starting the assistance in the advertising signal transmission. For example, the electronic device 800 may transmit information including a timing instant value to the first external electronic device 900, and the first external electronic device 900 may identify the time to start the assistance in the advertising signal transmission. Further, the electronic device 800 may also transmit a BIS event start time and the BIG synchronization information to the first external electronic device 900.

In an embodiment, operation 1135 may be omitted, and operation 1140 may be performed when operation 1130 is completed. For example, when completing the negotiation with the first external electronic device 900, the electronic device 800 may transmit the information related to the assistance in the advertising signal transmission to the first external electronic device 900.

In operation 1150, the first external electronic device 900 may start the assistance in the advertising signal transmission, based on the information related to the assistance in the advertising signal transmission received from the electronic device 800. In an embodiment, the first external electronic device 900 may also start the assistance in the advertising signal transmission, based on the received time information for starting the assistance in the advertising signal transmission, for example, the timing instant value. Further, the electronic device 800 may broadcast the EA signal and/or the PA signal for a certain period of time even after completing the negotiation with the first external electronic device 900 in operation 1130, and the first external electronic device 900 may scan the EA signal and/or the PA signal broadcast by the electronic device 800, may identify a channel sequence and timing in which the advertising signal to be broadcast by the assistance needs to be broadcast, and may then start the assistance in the advertising signal transmission.

The first external electronic device 900 may broadcast the EA signal in operation 1161, and may broadcast the PA signal in operation 1162. However, depending on the negotiation result in operation 1130, the first external electronic device 900 may broadcast only one of the EA signal or the PA signal or broadcast the advertising signal in the entire period or the partial period. In an embodiment, the electronic device 800 may be configured to refrain from transmitting the advertising signal and the first electronic device 900 may transmit the advertising signal as in operations 1161, 1162.

Further, in an embodiment, the electronic device 800 may transmit the information on the advertising signal including the information related to the BIS service in advance to the first external electronic device 900. Here, the first external electronic device 900 may immediately perform the assistance in the advertising signal transmission without a negotiation with the electronic device 800 according to an external input (e.g., a user's touch input, button input, input of a specific action, or input through a linked application) or a predetermined condition. For example, the first external electronic device may immediately broadcast the advertising signal. Here, the first external electronic device 900 may include a Bluetooth device, such as a dongle, or may include a cradle of a TW device including a Bluetooth chip. By the method of Fig. 11 the first electronic device 900 is configured by the electronic device 800, since the electronic device 800 may not be able to broadcast the advertising signal as the electronic device may be occupied with connections to other devices or other scheduled Bluetooth operations. As a result, the second electronic device(s) 1000 may be synchronized to BIS quicker.

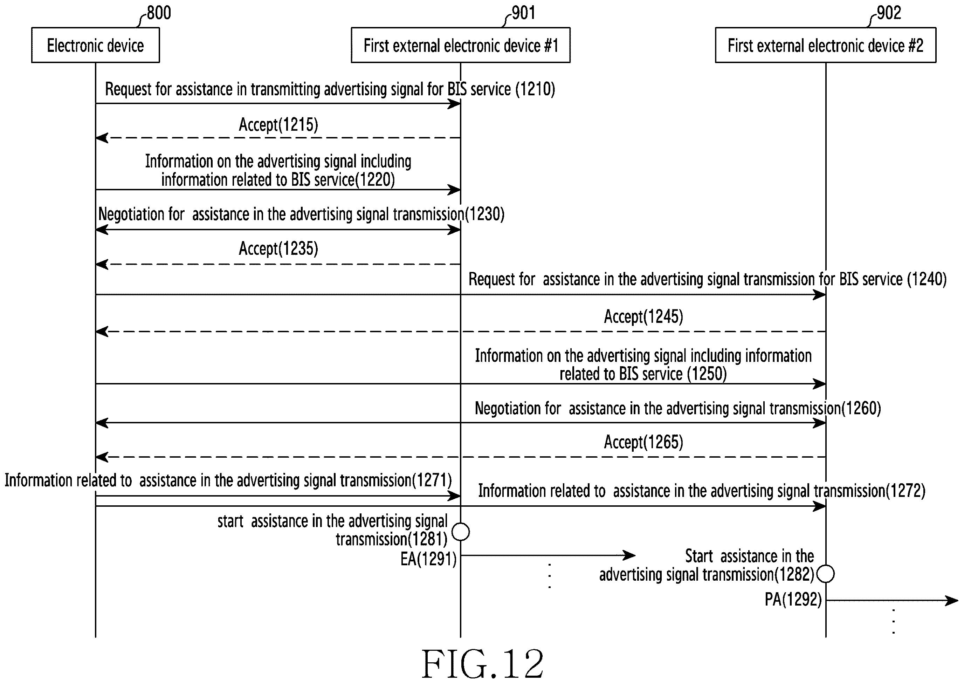

FIG. 12 is a flowchart illustrating an operating method for assisting in an advertising signal transmission for a BIS service according to an embodiment.

Referring to FIG. 12, an electronic device 800 performs an operation of assisting in the advertising signal transmission for a BIS service with two first external electronic devices, for example, first external electronic device #1 901 and first external electronic device #2 902.

In operation 1210, the electronic device 800 may transmit a request for assistance in an advertising signal transmission for a broadcast isochronous stream (BIS) service to first external electronic device #1 901. In an embodiment, the electronic device 800 may determine whether the assistance in the advertising signal transmission is necessary, based on at least one of an external input, an available radio resource, and a radio frequency (RF) environment, while performing the BIS service. For example, the electronic device 800 may determine whether the assistance in the advertising signal transmission is necessary, based on at least one of a user input, a preset policy for a radio resource, external interference or noise, or scheduling of the electronic device 800. The electronic device 800 may determine that the assistance in the advertising signal transmission is necessary when receiving a user input while generating a BIG or during a BIS service-related operation by generating a BIG, when the BIS service overlaps with the schedules of other BT tasks, such as an LE scan, paging, inquiry, or an inquiry scan, when external LE or a basic rate (BR)/enhanced data rate (EDR) link is generated and a corresponding operation period overlaps with the broadcast time of an EA signal and/or PA signal or there is a need to prepare for a case where the operation period overlaps the broadcast time of the EA signal and/or PA signal, or when broadcast is impossible in some periods due to coexistence (COEX) of Wi-Fi. When determining that the assistance in the advertising signal transmission is necessary, the electronic device 800 may perform operation 1210.

In an embodiment, the advertising signal is a signal for synchronization of the BIS service, and may include an extended advertising (EA) signal and/or a periodic advertising (PA) signal. The electronic device 800 may request the assistance in the advertising signal transmission for the entire period or a partial period of the EA signal and/or PA signal.

In an embodiment, the electronic device 800 may establish first external link #1 with first external electronic device #1 901 through a physical channel, such as LE, BR/EDR link, or Wi-Fi, and may communicate with first external electronic device #1 901 through established first external link #1.

In operation 1215, first external electronic device #1 901 may transmit an acceptance message in response to the request for the assistance in the advertising signal transmission for the BIS service to the electronic device 800. In an embodiment, operation 1215 may be omitted.

In operation 1220, the electronic device 800 may transmit information on the advertising signal including information related to the BIS service to first external electronic device #1 901. The electronic device 800 may transmit information necessary for first external electronic device #1 901 to transmit the advertising signal instead to first external electronic device #1 901. In an embodiment, the information on the advertising signal may include at least one of the information related to the BIS service, extended advertising (EA) information, periodic advertising (PA) information, or broadcast isochronous group (BIG) synchronization information. Specifically, the information on the advertising signal may include ADV_EXT_IND and AUX_ADV_IND information of the EA signal and/or AUX_SYNC_IND information of the PA signal.

In an embodiment, operation 1215 may be omitted, and operation 1210 and operation 1220 may be performed as a single operation. For example, the electronic device 800 may transmit the information on the advertising signal including the information related to the BIS service along with the request for the assistance in the advertising signal transmission for the BIS service to first external electronic device #1 901.

In operation 1230, the electronic device 800 may perform a negotiation for the assistance in the advertising signal transmission with first external electronic device #1 901, based on the information on the advertising signal. In an embodiment, the electronic device 800 may negotiate with first external electronic device #1 901 for at least one of the type of the advertising signal, assistance time, and an assistance type for the assistance in the advertising signal transmission. The type of the advertising signal may include an EA signal and a PA signal, the assistance time may include at least part of a BIS service period, a period determined by a preset algorithm, and a period in which the electronic device is unable to broadcast the advertising signal, and the assistance type may include a first assistance type which first external electronic device #1 901 broadcasts at least one of an EA signal and a PA signal that are the same as the EA signal and the PA signal of the electronic device 800 and a second assistance type which first external electronic device #1 901 generates and broadcasts at least one of an EA signal and a PA signal including BIG synchronization information that is the same as the BIG synchronization information included in the EA signal and the PA signal of the electronic device 800.

In an embodiment, the negotiation for the assistance in the advertising signal transmission between the electronic device 800 and first external electronic device #1 901 may be a type which the electronic device 800 first transmits necessary operations to first external electronic device #1 901 and first external electronic device #1 901 accepts possible operations, a type which first external electronic device #1 901 first transmits possible operations to the electronic device 800 and the electronic device 800 transmits necessary operations, or a type which the electronic device 800 and first external electronic device #1 901 exchange necessary operations and possible operations and select overlapping operations. However, the foregoing examples of the negotiation are only for illustration, and the electronic device 800 may negotiate with first external electronic device #1 901 in various types without being limited thereto.

When performing the negotiation with first external electronic device #1 901, the electronic device 800 may perform the negotiation considering first external electronic device #2 902. For example, the electronic device 800 may perform the negotiation considering a situation in which first external electronic device #1 901 broadcasts the EA signal and first external electronic device #2 902 broadcasts the PA signal.

In operation 1235, first external electronic device #1 901 may receive an acceptance message regarding the result of the negotiation for the assistance in the advertising signal transmission from the electronic device 800. In an embodiment, operation 1235 may be omitted.

In operation 1240, the electronic device 800 may transmit a request for assistance in an advertising signal transmission for a broadcast isochronous stream (BIS) service to first external electronic device #2 902. In an embodiment, the electronic device 800 may determine whether the assistance in the advertising signal transmission is necessary, based on at least one of an external input, an available radio resource, and a radio frequency (RF) environment, while performing the BIS service. For example, the electronic device 800 may determine whether the assistance in the advertising signal transmission is necessary, based on at least one of a user input, a preset policy for a radio resource, external interference or noise, or scheduling of the electronic device 800. The electronic device 800 may determine that the assistance in the advertising signal transmission is necessary when receiving a user input while generating a BIG or during a BIS service-related operation by generating a BIG, when the BIS service overlaps with the schedules of other BT tasks, such as an LE scan, paging, inquiry, or an inquiry scan, when external LE or a basic rate (BR)/enhanced data rate (EDR) link is generated and a corresponding operation period overlaps with the broadcast time of an EA signal and/or PA signal or there is a need to prepare for a case where the operation period overlaps the broadcast time of the EA signal and/or PA signal, or when broadcast is impossible in some periods due to coexistence (COEX) of Wi-Fi. When determining that the assistance in the advertising signal transmission is necessary, the electronic device 800 may perform operation 1240.

In an embodiment, the advertising signal is a signal for synchronization of the BIS service, and includes an extended advertising (EA) signal and/or a periodic advertising (PA) signal. The electronic device 800 may request the assistance in the advertising signal transmission for the entire period or a partial period of the EA signal and/or PA signal.

In an embodiment, the electronic device 800 may establish first external link #2 with first external electronic device #2 902 through a physical channel, such as LE, BR/EDR link, or Wi-Fi, and may communicate with first external electronic device #2 902 through established first external link #2.

In operation 1245, first external electronic device #2 902 may transmit an acceptance message in response to the request for the assistance in the advertising signal transmission for the BIS service to the electronic device 800. In an embodiment, operation 1245 may be omitted.

In operation 1250, the electronic device 800 may transmit information on the advertising signal including information related to the BIS service to first external electronic device #2 902. The electronic device 800 may transmit information necessary for first external electronic device #2 902 to broadcast the advertising signal instead to first external electronic device #2 902. In an embodiment, the information on the advertising signal may include at least one of the information related to the BIS service, extended advertising (EA) information, periodic advertising (PA) information, or broadcast isochronous group (BIG) synchronization information. Specifically, the information on the advertising signal may include ADV_EXT_IND and AUX_ADV_IND information of the EA signal and/or AUX_SYNC_IND information of the PA signal.

In an embodiment, operation 1245 may be omitted, and operation 1240 and operation 1250 may be performed as a single operation. For example, the electronic device 800 may transmit the information on the advertising signal including the information related to the BIS service along with the request for the assistance in the advertising signal transmission for the BIS service to first external electronic device #2 902.

In operation 1260, the electronic device 800 may perform a negotiation for the assistance in the advertising signal transmission with first external electronic device #2 902, based on the information on the advertising signal. In an embodiment, the electronic device 800 may negotiate with first external electronic device #2 902 for at least one of the type of the advertising signal, assistance time, and an assistance type for the assistance in the advertising signal transmission. The type of the advertising signal may include an EA signal and/or a PA signal, the assistance time may include at least part of a BIS service period, a period determined by a preset algorithm, and a period in which the electronic device is unable to broadcast the advertising signal, and the assistance type may include a first assistance type which first external electronic device #2 902 broadcasts at least one of an EA signal and a PA signal that are the same as the EA signal and the PA signal of the electronic device 800 and a second assistance type which first external electronic device #2 902 generates and broadcasts at least one of an EA signal and a PA signal including BIG synchronization information that is the same as the BIG synchronization information included in the EA signal and the PA signal of the electronic device 800.

In an embodiment, the negotiation for the assistance in the advertising signal transmission between the electronic device 800 and first external electronic device #2 902 may be a type which the electronic device 800 first transmits necessary operations to first external electronic device #2 902 and first external electronic device #2 902 accepts possible operations, a type which first external electronic device #2 902 first transmits possible operations to the electronic device 800 and the electronic device 800 transmits necessary operations, or a type which the electronic device 800 and first external electronic device #2 902 exchange necessary operations and possible operations and select overlapping operations. However, the foregoing examples of the negotiation are only for illustration, and the electronic device 800 may negotiate with first external electronic device #2 902 in various types without being limited thereto.

When performing the negotiation with first external electronic device #2 902, the electronic device 800 may perform the negotiation considering first external electronic device #1 901. For example, the electronic device 800 may perform the negotiation considering a situation in which first external electronic device #1 901 broadcasts the EA signal and first external electronic device #2 902 broadcasts the PA signal.

In operation 1265, first external electronic device #2 902 may receive an acceptance message regarding the result of the negotiation for the assistance in the advertising signal transmission from the electronic device 800. In an embodiment, operation 1265 may be omitted.

Although FIG. 12 shows that the negotiation with first external electronic device #2 902 is performed after the negotiation with first external electronic device #1 901, which is only for illustration, negotiations with a plurality of first external electronic devices may be performed by various methods. The electronic device 800 may perform the negotiation with first external electronic device #1 901 and the negotiation with first external electronic device #2 902 in parallel. For example, some of operation 1210 to operation 1235 may be performed simultaneously with some of operation 1240 to operation 1265.

As shown in FIG. 12, when there are two or more first external electronic devices (e.g., first external electronic device #1 901 and first external electronic device #2 902), one (e.g., first external electronic device #1 901 or first external electronic device #2 902) of the first external electronic devices may be a priority negotiation target. The electronic device 800 may determine one of the two or more first external electronic devices (e.g., first external electronic device #1 901 and first external electronic device #2 902) as a priority negotiation target, based on at least one of the order or the reverse order in which the devices have recently been connected, the order of high RSSIs of the connected devices, the order of low resource occupancy of packets exchanged through each first external link, and available resource information about each external electronic device previously received through each first external link. Further, when there are two or more connected first external links and all external electronic devices connected to each external link are capable of assisting in the advertising signal transmission, the electronic device 800 may perform a negotiation such that each device assists in transmitting each of the EA signal or the PA signal.

In operation 1271, the electronic device 800 may transmit information related to the assistance in the advertising signal transmission to first external electronic device #1 901. In operation 1272, the electronic device 800 may transmit the information related to the assistance in the advertising signal transmission to first external electronic device #2 902. In an embodiment, the information related to the assistance in the advertising signal transmission may include time information for starting the assistance in the advertising signal transmission. For example, the electronic device 800 may transmit information including a timing instant value to first external electronic device #1 901 and first external electronic device #2 902, and first external electronic device #1 901 and first external electronic device #2 902 may identify the time to start the assistance in the advertising signal transmission. Further, the electronic device 800 may also transmit a BIS event start time and/or the BIG synchronization information to first external electronic device #1 901 and first external electronic device #2 902.

In an embodiment, first external electronic device #1 901 and first external electronic device #2 902 may start the assistance in the advertising signal transmission, based on the received time information for starting the assistance in the advertising signal transmission, for example, the timing instant value. Further, the electronic device 800 may broadcast the EA signal and/or the PA signal for a certain period of time even after completing the negotiations with first external electronic device #1 901 and first external electronic device #2 902, and first external electronic device #1 901 and first external electronic device #2 902 may scan the EA signal and/or the PA signal broadcast by the electronic device 800, may identify a channel sequence and timing in which the advertising signal to be broadcast by the assistance needs to be transmitted, and may then start the assistance in the advertising signal transmission.

In an embodiment, at least some of operation 1235 and operation 1265 may be omitted, and operation 1271 and operation 1272 may be performed when operation 1230 and operation 1260 are completed. For example, when completing the negotiations with first external electronic device #1 901 and first external electronic device #2 902, the electronic device 800 may transmit the information related to the assistance in the advertising signal transmission to first external electronic device #1 901 and first external electronic device #2 902.

In operation 1281, first external electronic device #1 901 may start the assistance in the advertising signal transmission, based on the information related to the assistance in the advertising signal transmission received from the electronic device 800. In operation 1291, first external electronic device #1 901 may broadcast the EA signal.

In operation 1282, first external electronic device #2 902 may start the assistance in the advertising signal transmission, based on the information related to the assistance in the advertising signal transmission received from the electronic device 800. In operation 1292, first external electronic device #2 902 may broadcast the PA signal. In other words, the advertising configured for the first external electronic device #1 901 may be different from the advertising configured for the first external electronic device #2 902. This allows to increase flexibility of configuring and broadcasting the advertising signal.

However, depending on the negotiation results in operation 1230 and operation 1260, first external electronic device #1 901 and first external electronic device #2 902 may each broadcast only one of the EA signal or the PA signal, or broadcast the advertising signal in the entire period or the partial period.

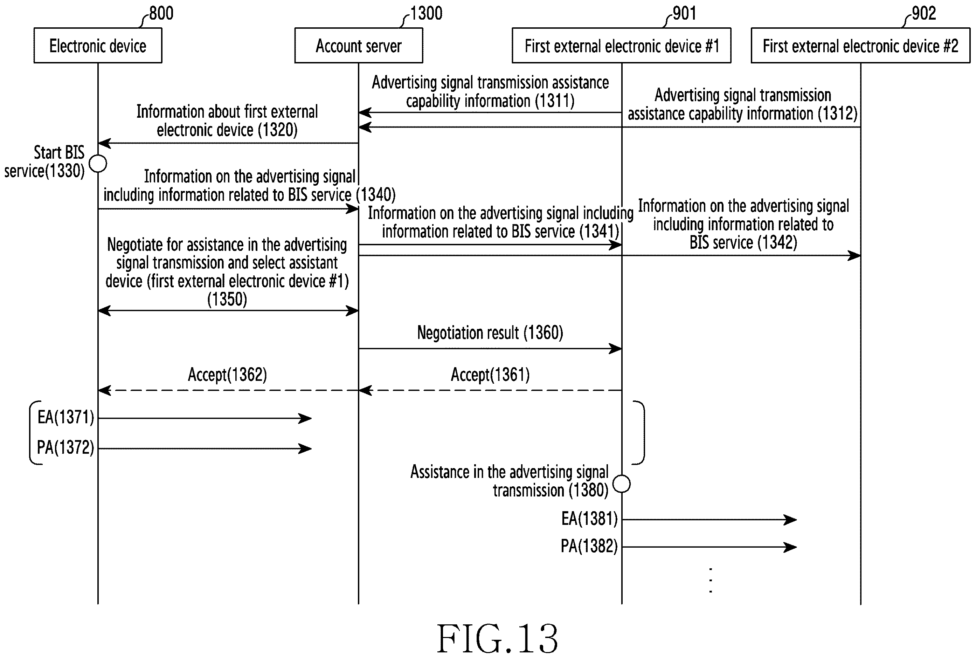

FIG. 13 is a flowchart illustrating an operating method for assisting in an advertising signal transmission for a BIS service according to an embodiment.

FIG. 13 illustrates an operation of assisting in the advertising signal transmission for a BIS service by using an account server 1300 when an electronic device 800 and a plurality of first external electronic devices, for example, first external electronic device #1 901 and first external electronic device #2 902, are registered with the same account in the account server 1300. In an embodiment, the electronic device 800 and the plurality of first external electronic devices may be connected to the account server 1300 through a wired or wireless network (e.g., a cellular network or Wi-Fi). The account server 1300 allows to centralize the negotiations for assistance in an advertising signal(s) therefore it becomes easier and quicker to determine which device(s) will transmit which advertising signals.

In operation 1311, first external electronic device #1 901 may transmit advertising signal transmission assistance capability information to the account server 1300. In operation 1312, first external electronic device #2 902 transmits advertising signal transmission assistance capability information to the account server 1300. In an embodiment, the advertising signal transmission assistance capability information may include information about whether assistance in an advertising signal transmission is possible and information about available resources. In an embodiment, the account server 1300 may configure a time period for receiving advertising signal transmission assistance capability information from the plurality of first external electronic devices, and may receive advertising signal transmission assistance capability information in the time period. In an embodiment, the advertising signal transmission assistance capability information may be periodically updated.

In operation 1320, the account server 1300 may transmit information about the first external electronic devices to the electronic device 800. The account server 1300 may transmit the advertising signal transmission assistance capability information received from the plurality of first external electronic devices to the electronic device 800. In an embodiment, the account server 1300 may transmit the advertising signal transmission assistance capability information received from the plurality of first external electronic devices to the electronic device 800, based on a request from the electronic device 800. In an embodiment, the account server 1300 may periodically update advertising signal transmission assistance capability information about the electronic device 800 and/or the plurality of first external electronic devices to the electronic device 800 that are registered with the same account to the electronic device 800 and/or the plurality of first external electronic devices.

In operation 1330, the electronic device 800 may start a BIS service.

In operation 1340, the electronic device 800 may transmit information on the advertising signal including information related to the BIS service to the account server 1300. The electronic device 800 may transmit, to the account server 1300, information that the account server 1300 needs to transmit to the plurality of first external electronic devices. In an embodiment, the information on the advertising signal may include at least one of the information related to the BIS service, extended advertising (EA) information, periodic advertising (PA) information, or broadcast isochronous group (BIG) synchronization information. Specifically, the information on the advertising signal may include ADV_EXT_IND and AUX_ADV_IND information of an EA signal and/or AUX_SYNC_IND information of a PA signal.

In operation 1341, the account server 1300 may transmit the information on the advertising signal including the information related to the BIS service received from the electronic device 800 to first external electronic device #1 901. In operation 1342, the account server 1300 may transmit the information on the advertising signal including the information related to the BIS service received from the electronic device 800 to the first external electronic device #2 902.

In operation 1350, the electronic device 800 may perform a negotiation for assistance in an advertising signal transmission and a negotiation for selecting an assistant device for transmitting an advertising signal with the account server 1300 instead of a first external device that broadcasts an advertising signal instead. The electronic device 800 may perform the negotiation for the assistance in the advertising signal transmission with the account server 1300, based on the information on the advertising signal. In an embodiment, the electronic device 800 may negotiate with the account server 1300 for at least one of the type of the advertising signal, assistance time, and an assistance type for the assistance in the advertising signal transmission. The type of the advertising signal may include an EA signal and a PA signal, the assistance time may include at least part of a BIS service period, a period determined by a preset algorithm, and a period in which the electronic device is unable to broadcast the advertising signal, and the assistance type may include a first assistance type which the first external electronic device 900 broadcasts at least one of an EA signal and a PA signal that are the same as an EA signal and a PA signal of the electronic device 800 and a second assistance type which the first external electronic device 900 generates and broadcasts at least one of an EA signal and a PA signal including BIG synchronization information that is the same as the BIG synchronization information included in the EA signal and the PA signal of the electronic device 800.

In an embodiment, when there is the plurality of first external electronic devices, the account server 1300 may perform a negotiation for a first external electronic device in the same space that is capable of assisting the electronic device 800 in transmitting an advertising signal. When there is the plurality of first external electronic devices, the account server 1300 may perform a negotiation by selecting one first external electronic device according to a preset criterion or a user input. The preset criterion may be the distance to the electronic device 800, an available resource, the order of registration in the account server 1300, the order of latest connections, or the order of names. However, the criterion is only for illustration, and various criteria may be configured without being limited thereto. Further, it is possible to negotiate such that each first external electronic device assists in transmitting each of an EA signal or a PA signal. In FIG. 12, a description is made assuming that first external electronic device #1 901 is selected as a device to assist in transmitting an advertising signal.

In an embodiment, when performing the negotiation, the electronic device 800 and the account server 1300 may determine a predetermined time when the electronic device 800 needs to broadcast an advertising signal. When using the account server 1300, unlike a Bluetooth link, it may be difficult to accurately calculate a timing instant value. Accordingly, the electronic device 800 may broadcast the EA signal and/or the PA signal for a certain period of time even after completing the negotiation, and the first external electronic device 900 may scan the EA signal and/or the PA signal broadcast by the electronic device 800, may identify a channel sequence and timing in which the advertising signal to be broadcast by the assistance needs to be broadcast, and may then start the assistance in the advertising signal transmission. Here, since the timing at which the first external electronic device 900 needs to broadcast the advertising signal is determined during the negotiation, the electronic device 800 may omit an operation of transmitting time information for starting the assistance in the advertising signal transmission to the first external electronic device 900 unlike the embodiment illustrated in FIG. 11 and FIG. 12.

In operation 1360, the account server 1300 may transmit a negotiation result to selected first external electronic device #1 901.

First external electronic device #1 901 may transmit an acceptance message in response to the negotiation result to the account server 1300 in operation 1361, and the account server 1300 may transmit the acceptance message in response to the negotiation result to the electronic device 800 in operation 1362. In an embodiment, operation 1361 and operation 1362 may be omitted.

Subsequently, the electronic device 800 may broadcast the advertising signal for the predetermined time determined in the negotiation. The electronic device 800 may broadcast the EA signal in operation 1371 and the PA signal in operation 1372.

In operation 1380, first external electronic device #1 901 may start assisting in transmitting the advertising signal according to the negotiation result. First external electronic device #1 901 may broadcast the EA signal in operation 1381 and the PA signal in operation 1382 according to the negotiation result. Alternatively, first external electronic device #1 901 may broadcast only one of the EA signal or the PA signal or broadcast the advertising signal in the entire period or a partial period depending on the negotiation result.

In addition, in an embodiment, while first external electronic device #1 901 is assisting the electronic device 800 in transmitting the advertising signal, an additional electronic device related with the same account may generate a new BIS and may add information about an advertising signal to the account server 1300. Here, since first external electronic device #1 901 is already assisting the electronic device 800 related with the same account in transmitting the advertising signal, first external electronic device #1 901 may immediately start assisting the additional electronic device in transmitting the advertising signal without a negotiation process. Specifically, first external electronic device #1 901 has already negotiated for the account related with the electronic device 800, and may thus scan an EA signal and/or a PA signal for a predetermined time, identify a channel sequence and timing in which the advertising signal to be broadcast by assistance needs to be broadcast, and then immediately start the assistance in the advertising signal transmission without a negotiation process. However, the assistance in the advertising signal transmission may not be performed for the newly added electronic device depending on a configuration.

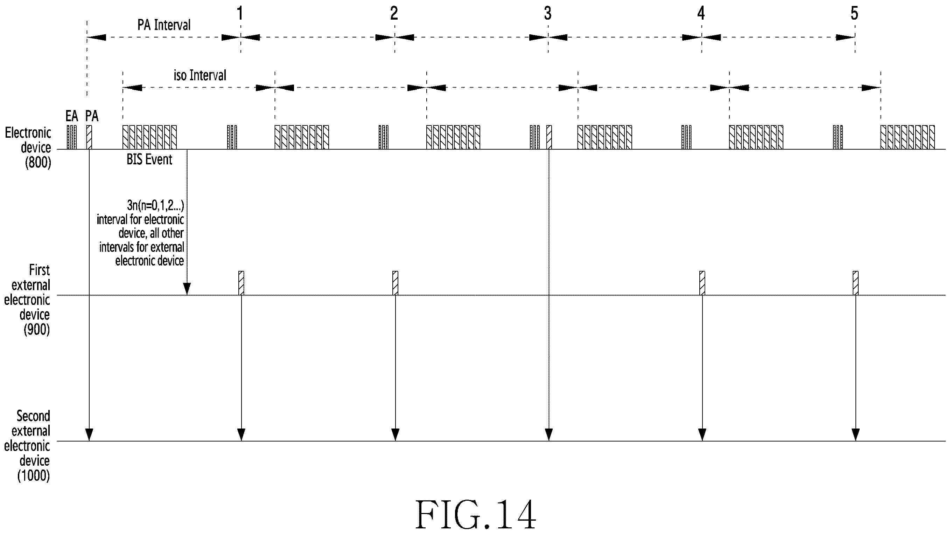

FIG. 14 illustrates a method of transmitting an advertising signal according to an embodiment.

As described above, a first external electronic device 900 may start assistance in an advertising signal transmission, based on information related to assistance in an advertising signal transmission received from an electronic device 800 after completing a negotiation with the electronic device 800. In an embodiment, the first external electronic device 900 may start the assistance in the advertising signal transmission, based on received time information for starting assistance in an advertising signal transmission, for example, a timing instant value. The first external electronic device 900 may broadcast only one of an EA signal or a PA signal or broadcast the advertising signal in the entire period or a partial period depending on a negotiation result. For example, the first external electronic device 900 may broadcast the advertising signal only in a designated period. The electronic device 800 may stop broadcasting the advertising signal or continue to broadcast the advertising in the designated section in which the first external electronic device 900 assists in broadcasting the advertising signal. However, to prevent a collision between the same signals, it is desirable for the electronic device 800 to stop broadcasting the advertising signal in the designated period.

In an embodiment, the first external electronic device 900 may broadcast the advertising signal only in a period designated by mathematical calculation, or may broadcast the advertising signal only in a period defined in complex consideration of RSSI strength or conditions of a surrounding RF environment. Referring to FIG. 14, the first external electronic device 900 assists only in broadcasting the PA signal of the advertising signal. In addition, the electronic device 800 may directly broadcast the PA signal in a 3n (n = 0, 1, 2, ...) ISO interval, and the first external electronic device 900 may broadcast only the PA signal instead in the remaining ISO interval except for the 3n ISO interval. The method of assisting in transmitting the advertising signal illustrated in FIG. 14 is for illustration, and the designated period may be configured by various methods without being limited thereto. For example, the first external electronic device 900 may broadcast the advertising signal in an even-numbered ISO interval, and the electronic device 800 may broadcast the advertising signal in an odd-numbered ISO interval. Although FIG. 14 shows that the first external electronic device 900 instead broadcasts only the PA signal, the first external electronic device 900 may instead broadcast only the EA signal or both the EA signal and the PA signal.

A second external electronic device 1000 may receive the EA signal and the PA signal, and may synchronize with a BIS channel. In an embodiment, the EA signal and/or the PA signal broadcast by the electronic device 800 and the EA signal and/or the PA signal broadcast by the first external electronic device 900 that assists in transmitting the advertising signal of the electronic device 800 may be configured identically. Accordingly, the second external electronic device 1000 may synchronize with the BIS channel of the electronic device 800 regardless of whether the EA signal and the PA signal are broadcast from the electronic device 800 or from the first external electronic device 900.

In an embodiment, the foregoing advertising signal transmission period and timing of the first external electronic device 900 may be determined based on received information on the advertising signal for a BIS service by the first external electronic device 900 receiving the information on the advertising signal according to a configuration, or may be determined during the negotiation between the first external electronic device 900 and the electronic device 800.

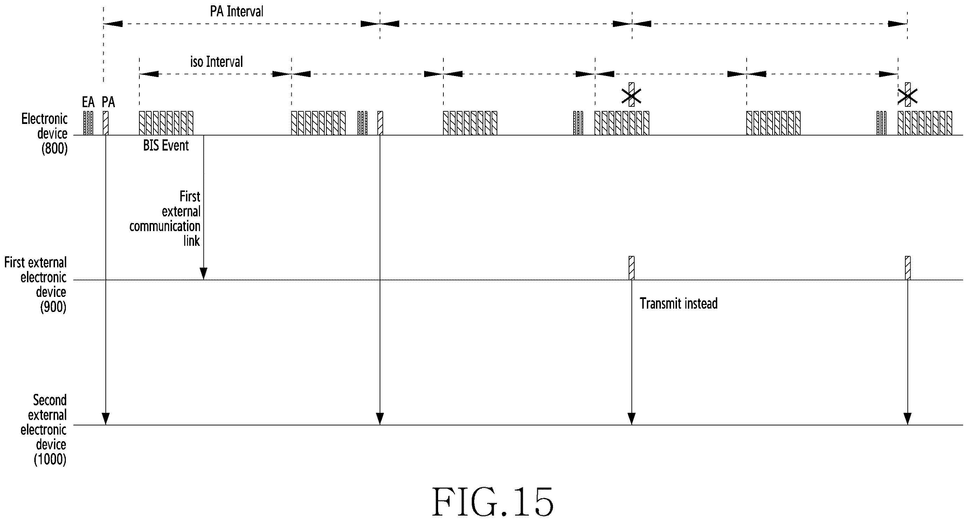

FIG. 15 illustrates a method of transmitting an advertising signal according to an embodiment.

An electronic device 800 may transmit information on the advertising signal for a BIS service to a first external electronic device 900, and may also transmit the information on the advertising signal for the BIS service during a negotiation between the electronic device 800 and the first external electronic device 900. The first external electronic device 900 may obtain EA information, PA information, BIG synchronization information, and pieces of connection information about external devices connected to the electronic device 800 through the foregoing process of transmitting the information on the advertising signal for the BIS service. The first external electronic device 900 may calculate a period in which a BIS event period overlaps with the time when an EA signal and/or a PA signal is broadcast or overlaps with an operation (e.g., a connection event) scheduled for connected devices, based on the obtained information.

In an embodiment, the first external electronic device 900 may broadcast an advertising signal instead, based on the obtained information, only in a period in which the electronic device 800 may not be able to broadcast the EA signal and/or the PA signal. Referring to FIG. 15, the electronic device 800 may broadcast the information on the advertising signal for the BIS service to the first external electronic device 900 through a first external communication link. Upon receiving the information on the advertising signal for the BIS service, the first external electronic device 900 may identify that the BIS event period and the broadcast period of the PA signal overlap in fourth and sixth (n=4, 6) ISO intervals. Accordingly, the external electronic device 900 may broadcast the PA signal in the overlapping period. The method of assisting in transmitting the advertising signal illustrated in FIG. 15 is for illustration, and the overlapping period may be identified and assistance in the advertising signal transmission may be performed by various methods without being limited thereto. Although FIG. 15 shows that the first external electronic device 900 broadcasts only the PA signal, the first external electronic device 900 may instead broadcast only the EA signal or both the EA signal and the PA signal.

A second external electronic device 1000 may receive the EA signal and the PA signal, and may synchronize with a BIS channel. In an embodiment, the EA signal and/or the PA signal broadcast by the electronic device 800 and the EA signal and/or the PA signal broadcast by the first external electronic device 900 that assists in transmitting the advertising signal of the electronic device 800 may be configured identically. Accordingly, the second external electronic device 1000 may synchronize with the BIS channel of the electronic device 800 regardless of whether the EA signal and the PA signal are broadcast from the electronic device 800 or from the first external electronic device 900.

In an embodiment, the foregoing advertising signal transmission period and timing of the first external electronic device 900 may be determined based on the received information on the advertising signal for the BIS service by the first external electronic device 900 receiving the information on the advertising signal according to a configuration, or may be determined during the negotiation between the first external electronic device 900 and the electronic device 800.

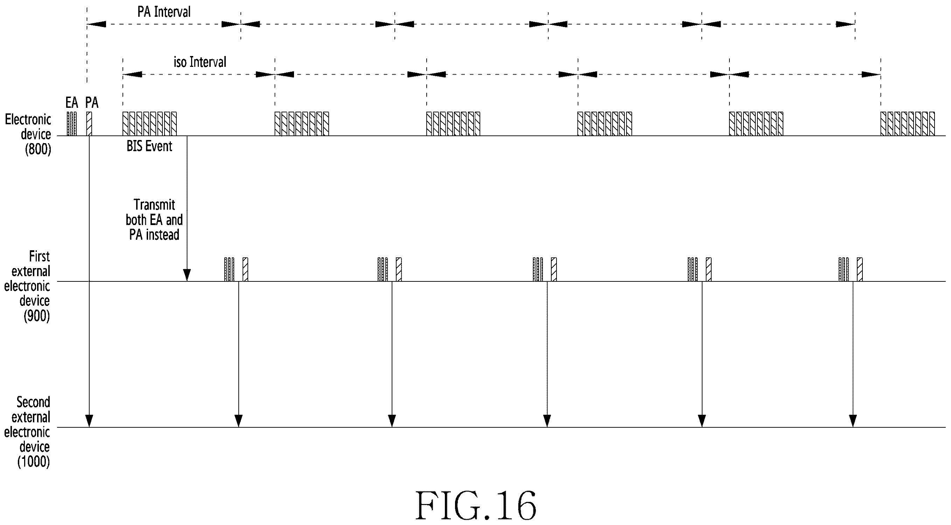

FIG. 16 illustrates a method of transmitting an advertising signal according to an embodiment.

A first external electronic device 900 may start assistance in an advertising signal transmission, based on information related to assistance in an advertising signal transmission received from an electronic device 800 after completing a negotiation with the electronic device 800. The first external electronic device 900 may receive a request for assistance in transmitting an EA signal and a PA signal through a negotiation process, and may determine to broadcast both the EA signal and the PA signal or to broadcast only the EA signal or the PA signal. When the first external electronic device 900 determines to broadcast both the EA signal and the PA signal in the negotiation process, the electronic device 800 may no longer broadcast the EA signal and the PA signal, and may broadcast only sound source data. Referring to FIG. 16, the first external electronic device 900 is delegated by the electronic device 800 to broadcast both the EA signal and the PA signal instead, and broadcasts the EA signal and the PA signal. The electronic device 800 may broadcast only the sound source data in a BIS event period.

A second external electronic device 1000 may receive the EA signal and the PA signal, and may synchronize with a BIS channel. In an embodiment, the EA signal and/or the PA signal broadcast by the electronic device 800 and the EA signal and/or the PA signal broadcast by the first external electronic device 900 that assists in transmitting the advertising signal of the electronic device 800 may be configured identically. Accordingly, the second external electronic device 1000 may synchronize with the BIS channel of the electronic device 800 regardless of whether the EA signal and the PA signal are broadcast from the electronic device 800 or from the first external electronic device 900.

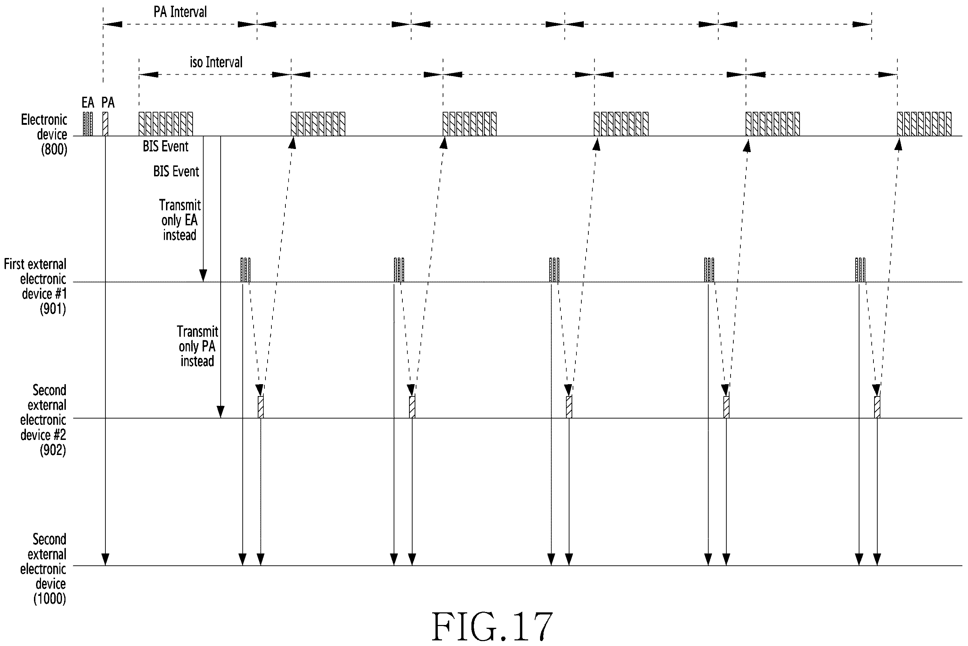

FIG. 17 illustrates a method of transmitting an advertising signal according to an embodiment.

Referring to FIG. 17, an electronic device 800 may perform an operation of assisting in the advertising signal transmission for a BIS service with two first external electronic devices, for example, first external electronic device #1 901 and first external electronic device #2 902. The electronic device 800 may determine through a negotiation with first external electronic device #1 901 and first external electronic device #2 902 that first external electronic device #1 901 assists in transmitting an EA signal and first external electronic device #2 902 assists in transmitting a PA signal. Referring to FIG. 17, first external electronic device #1 901 is delegated by the electronic device 800 to broadcast the EA signal instead and broadcasts the EA signal, and first external electronic device #2 902 is delegated by the electronic device 800 to broadcast the PA signal instead and broadcasts the PA signal. Here, first external electronic device #2 902 may receive a PA signal broadcast by first external electronic device #1 901, may generate an EA signal, based on the received PA signal, and may broadcast the generated EA signal. The electronic device 800 may broadcast only sound source data in a BIS event period.

A second external electronic device 1000 may receive the EA signal and the PA signal, and may synchronize with a BIS channel. In an embodiment, an EA signal broadcast by the electronic device 800 and the EA signal broadcast by first external electronic device #1 901 that assists in transmitting the advertising signal, and a PA signal broadcast by the electronic device 800 and the PA signal broadcast by first external electronic device #2 902 may be configured identically. Accordingly, the second external electronic device 1000 may synchronize with the BIS channel of the electronic device 800 regardless of whether the EA signal and the PA signal are broadcast from the electronic device 800 or from first external electronic device #1 901 and first external electronic device #2 902.

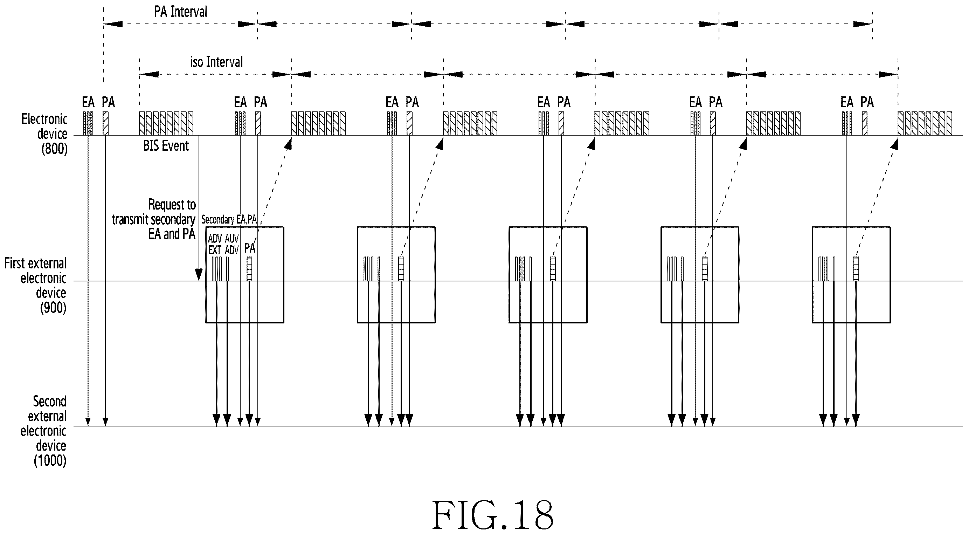

FIG. 18 illustrates a method of transmitting an advertising signal according to an embodiment.

An electronic device 800 may transmit information on the advertising signal for a BIS service to a first external electronic device 900, and may also transmit the information on the advertising signal for the BIS service during a negotiation between the electronic device 800 and the first external electronic device 900. The first external electronic device 900 may obtain EA information, PA information, BIG synchronization information, and pieces of connection information about external devices connected to the electronic device 800 through the foregoing process of transmitting the information on the advertising signal for the BIS service. The first external electronic device 900 may broadcast an EA signal and/or a PA signal the same as an EA signal and/or a PA signal broadcast by the electronic device 800, or may generate and broadcast a new EA signal and/or PA signal, for example, a secondary EA signal and/or PA signal, including BIG synchronization information the same as BIG synchronization information included in the EA signal and/or the PA signal broadcast by the electronic device 800, based on the obtained information. Since the new EA signal and/or PA signal includes the BIG synchronization information the same as that of the electronic device 800, a second external electronic device 1000 receiving the EA signal and/or PA signal may be synchronized with the electronic device 800 providing the BIS service.

In an embodiment, since the EA signal and/or PA signal broadcast by the first external electronic device 900 includes the same BIG synchronization information as that in the EA signal and/or PA signal broadcast by the electronic device 800 but is not the same signal as the EA signal and/or PA signal broadcast by the electronic device 800, there is no concern about a collision even though the electronic device 800 continues to broadcast the EA signal and/or PA signal. Accordingly, as illustrated in FIG. 18, the electronic device 800 may continue to broadcast the EA signal and/or the PA signal, or may stop broadcasting the EA signal and/or the PA signal.

The second external electronic device 1000 may receive the EA signal and the PA signal, and may synchronize with a BIS channel. In an embodiment, the EA signal and/or the PA signal broadcast by the electronic device 800 and the EA signal and/or the PA signal broadcast by the first external electronic device 900 that assists in transmitting an advertising signal of the electronic device 800 are configured to indicate a BIS channel broadcast by the same source device, for example, the electronic device 800. Accordingly, the second external electronic device 1000 may synchronize with the BIS channel of the electronic device 800 regardless of whether the second external electronic device 1000 receives the EA signal and the PA signal broadcast by the electronic device 800 or the EA signal and/or the PA signal broadcast by the first external electronic device 900.

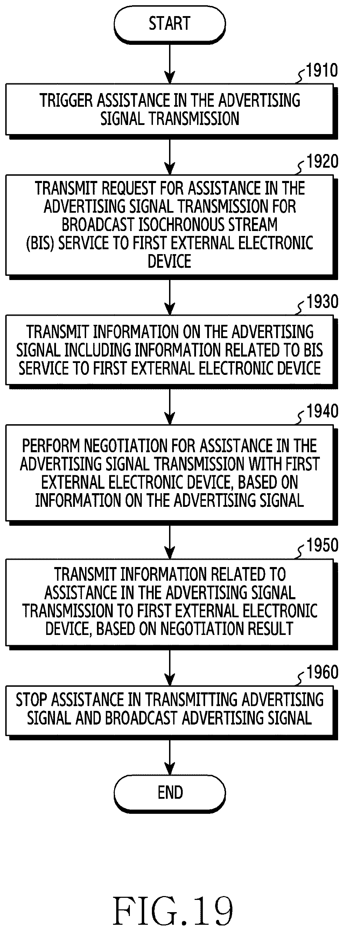

FIG. 19 is a flowchart illustrating an operating method of an electronic device according to an embodiment.

In operation 1910, an electronic device 800 may trigger assistance or an operation of assisting in the advertising signal transmission. In an embodiment, the electronic device 800 may determine whether the assistance in the advertising signal transmission is necessary, based on at least one of an external input, an available radio resource, and a radio frequency (RF) environment, while or even before performing a BIS service. For example, the electronic device 800 may determine whether the assistance in the advertising signal transmission is necessary, based on at least one of a user input, a preset policy for a radio resource, external interference or noise, or scheduling of the electronic device 800. The electronic device 800 may determine that the assistance in the advertising signal transmission is necessary when receiving a user input while generating a BIG or during a BIS service-related operation by generating a BIG, when the BIS service overlaps with the schedules of other BT tasks, such as an LE scan, paging, inquiry, or an inquiry scan, when external LE or a basic rate (BR)/enhanced data rate (EDR) link is generated and a corresponding operation period overlaps with the broadcast time of an EA signal and/or PA signal or there is a need to prepare for a case where the operation period overlaps the broadcast time of the EA signal and/or PA signal, or when broadcast is impossible in some periods due to coexistence (COEX) of Wi-Fi. When determining that the assistance in the advertising signal transmission is necessary, the electronic device 800 may trigger the assistance in the advertising signal transmission.

In operation 1920, the electronic device 800 may transmit a request for assistance in an advertising signal transmission for a broadcast isochronous stream (BIS) service to a first external electronic device.

In an embodiment, the advertising signal is a signal for synchronization of the BIS service, and may include an extended advertising (EA) signal and/or a periodic advertising (PA) signal. The electronic device 800 may request the assistance in the advertising signal transmission for the entire period or a partial period of the EA signal and/or PA signal. The electronic device 800 may receive an acceptance message in response to the request for assistance in the advertising signal transmission for the BIS service from the first external electronic device 900, and an operation of receiving the acceptance message may be omitted.

In an embodiment, the electronic device 800 may establish an external link with the first external electronic device 900 through a physical channel, such as LE, BR/EDR link, or Wi-Fi, and may communicate with the first external electronic device 900 through the established external link.

In operation 1930, the electronic device 800 may transmit information on the advertising signal including information related to the BIS service to the first external electronic device 900. The electronic device 800 may transmit information necessary for the first external electronic device 900 to broadcast the advertising signal instead to the first external electronic device 900. In an embodiment, the information on the advertising signal may include at least one of the information related to the BIS service, extended advertising (EA) information, periodic advertising (PA) information, or broadcast isochronous group (BIG) synchronization information. Specifically, the information on the advertising signal may include ADV_EXT_IND and AUX_ADV_IND information of the EA signal and/or AUX_SYNC_IND information of the PA signal.

In an embodiment, operation 1910 and operation 1920 may be performed as a single operation. For example, the electronic device 800 may transmit the information on the advertising signal including the information related to the BIS service along with the request for the assistance in the advertising signal transmission for the BIS service to the first external electronic device 900.

In operation 1940, the electronic device 800 may perform a negotiation for the assistance in the advertising signal transmission with the first external electronic device 900, based on the information on the advertising signal. In an embodiment, the electronic device 800 may negotiate with the first external electronic device 900 for at least one of the type of the advertising signal, assistance time, and an assistance type for the assistance in the advertising signal transmission. The type of the advertising signal may include an EA signal and a PA signal, the assistance time may include at least part of a BIS service period, a period determined by a preset algorithm, and a period in which the electronic device is unable to broadcast the advertising signal, and the assistance type may include a first assistance type which the first external electronic device 900 broadcasts at least one of an EA signal and a PA signal that are the same as the EA signal and the PA signal of the electronic device 800 and a second assistance type which the first external electronic device 900 generates and broadcasts at least one of an EA signal and a PA signal including BIG synchronization information that is the same as the BIG synchronization information included in the EA signal and the PA signal of the electronic device 800.

In an embodiment, the negotiation for the assistance in the advertising signal transmission between the electronic device 800 and the first external electronic device 900 may be a type which the electronic device 800 first transmits necessary operations to the first external electronic device 900 and the first external electronic device 900 accepts possible operations, a type which the first external electronic device 900 first transmits possible operations to the electronic device 800 and the electronic device 800 transmits necessary operations, or a type which the electronic device 800 and the first external electronic device 900 exchange necessary operations and possible operations and select overlapping operations. However, the foregoing examples of the negotiation are only for illustration, and the electronic device 800 may negotiate with the first external electronic device 900 in various types without being limited thereto. The electronic device 800 may receive an acceptance message regarding a negotiation result from the first external electronic device 900, and an operation of receiving the acceptance message may be omitted.

In an embodiment, when there is a plurality of first external electronic devices 900, the electronic device 800 may negotiate the assistance in the advertising signal transmission with each of the first external electronic devices 900.

In operation 1950, the electronic device 800 may transmit information related to the assistance in the advertising signal transmission to the first external electronic device 900, based on the negotiation result. In an embodiment, the information related to the assistance in the advertising signal transmission may include time information for starting the assistance in the advertising signal transmission. For example, the electronic device 800 may transmit information including a timing instant value to the first external electronic device 900, and the first external electronic device 900 may identify the time to start the assistance in the advertising signal transmission. Further, the electronic device 800 may also transmit a BIS event start time and/or the BIG synchronization information to the first external electronic device 900.

In an embodiment, when the assistance in the advertising signal transmission starts, the electronic device 800 may broadcast at least one BIS for at least one second external device.

In operation 1960, the electronic device 800 may stop the assistance in the advertising signal transmission, and may broadcast the advertising signal. In an embodiment, the electronic device 800 may stop the assistance in the advertising signal transmission, based on at least one of an external input, a determination as to whether a predetermined condition is satisfied, and a notification from the first external electronic device 900.

Specifically, in an embodiment, the electronic device 800 may stop the assistance in the advertising signal transmission and autonomously broadcast the advertising signal or stop the BIS service when the assistance in the advertising signal transmission is no longer needed for various reasons, such as when a command to stop the assistance in the advertising signal transmission is received, when a surrounding radio frequency (RF) environment is higher than a configured criterion, when available resources are more than a threshold value and thus transmission assistance is no longer needed, or when the BIS service is discontinued. In this case, the electronic device 800 may request the first external electronic device 900 to stop the assistance in the advertising signal transmission.

In an embodiment, when the electronic device 800 receives a notification to stop the assistance in the advertising signal transmission from the first external electronic device 900, the electronic device 800 may directly broadcast the advertising signal that the first external electronic device 900 broadcasts instead.

In an embodiment, unless stopping the BIS service, the electronic device 800 may transmit a request to stop transmitting the advertising signal to the first external electronic device 900 and then broadcast all EA signals and PA signals without assistance from the first external electronic device 900.

In an embodiment, when there are two or more first external electronic devices 900 that performs assistance in an advertising signal transmission and only a specific device stops the assistance, the electronic device 800 may broadcast the advertising signal only with respect to the type of the advertising signal (e.g., EA or PA) for which transmission assistance is stopped, and all other first external electronic devices performing the assistance in the advertising signal transmission may also directly transmit the advertising signal after requesting a stop of transmission assistance.

In an embodiment, when there are two or more first external electronic devices 900 that performs assistance in an advertising signal transmission and only a specific device stops the assistance, the electronic device 800 may perform a negotiation with at least one of the first external electronic devices 900 except for the specific device for transmission assistance with respect to the type of the advertising signal (e.g., EA or PA) for which transmission assistance is stopped. For example, at least one of the first external electronic devices 900 except for the specific device may perform transmission assistance with respect to the type of advertising signal (e.g., EA or PA) broadcast by the specific device.

In an embodiment, when the electronic device 800 is disconnected from the first external electronic device 900 performing the assistance in the advertising signal transmission through a first external link and is thus unable to transmit the request to stop transmitting the advertising signal during a BIS service operation, the electronic device 800 may directly broadcast the advertising signal, which is otherwise broadcast by the first external electronic device 900, for example, the advertising signal transmitted instead by the first external electronic device 900.

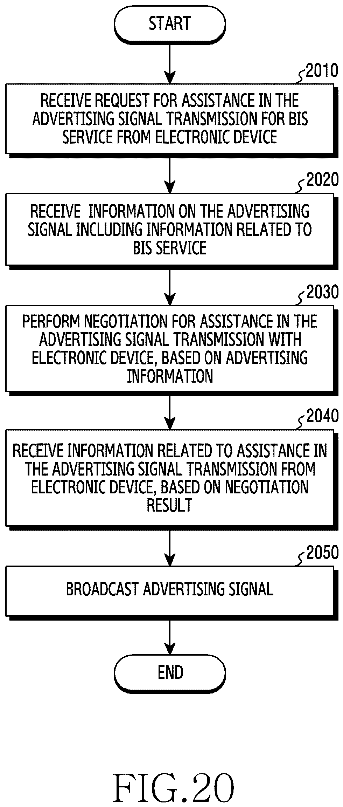

FIG. 20 is a flowchart illustrating an operating method of a first external electronic device according to an embodiment.

In operation 2010, a first external electronic device 900 may receive a request for assistance in an advertising signal transmission for a BIS service from an electronic device 800.

In an embodiment, the advertising signal is a signal for synchronization of the BIS service, and may include an extended advertising (EA) signal and/or a periodic advertising (PA) signal. The electronic device 800 may request the assistance in the advertising signal transmission for the entire period or a partial period of the EA signal and/or PA signal. The first external electronic device 900 may transmit an acceptance message in response to the request for assistance in the advertising signal transmission for the BIS service to the electronic device 800, and an operation of receiving the acceptance message may be omitted.

In an embodiment, the first external electronic device 900 may establish an external link with the electronic device 800 through a physical channel, such as LE, BR/EDR link, or Wi-Fi, and may communicate with the electronic device 800 through the established external link.

In operation 2020, the first external electronic device 900 may receive information on the advertising signal including information related to the BIS service from the electronic device 800. The first external electronic device 900 may receive information necessary for the first external electronic device 900 to broadcast the advertising signal instead from the electronic device 800. In an embodiment, the information on the advertising signal may include at least one of the information related to the BIS service, extended advertising (EA) information, periodic advertising (PA) information, or broadcast isochronous group (BIG) synchronization information. Specifically, the information on the advertising signal may include ADV_EXT_IND and AUX_ADV_IND information of the EA signal and/or AUX_SYNC_IND information of the PA signal.

In an embodiment, operation 2010 and operation 2020 may be performed as a single operation. For example, the first external electronic device 900 may receive the information on the advertising signal including the information related to the BIS service along with the request for the assistance in the advertising signal transmission for the BIS service from the electronic device 800.

In operation 2030, the first external electronic device 900 may perform a negotiation for the assistance in the advertising signal transmission with the electronic device 800, based on the information on the advertising signal. In an embodiment, the first external electronic device 900 may negotiate with the first external electronic device 800 for at least one of the type of the advertising signal, assistance time, and an assistance type for the assistance in the advertising signal transmission. The type of the advertising signal may include an EA signal and a PA signal, the assistance time may include at least part of a BIS service period, a period determined by a preset algorithm, and a period in which the electronic device is unable to broadcast the advertising signal, and the assistance type may include a first assistance type which the first external electronic device 900 broadcasts at least one of an EA signal and a PA signal that are the same as the EA signal and the PA signal of the electronic device 800 and a second assistance type which the first external electronic device 900 generates and broadcasts at least one of an EA signal and a PA signal including BIG synchronization information that is the same as the BIG synchronization information included in the EA signal and the PA signal of the electronic device 800.

In an embodiment, the negotiation for the assistance in the advertising signal transmission between the electronic device 800 and the first external electronic device 900 may be a type which the electronic device 800 first transmits necessary operations to the first external electronic device 900 and the first external electronic device 900 accepts possible operations, a type which the first external electronic device 900 first transmits possible operations to the electronic device 800 and the electronic device 800 transmits necessary operations, or a type which the electronic device 800 and the first external electronic device 900 exchange necessary operations and possible operations and select overlapping operations. However, the foregoing examples of the negotiation are only for illustration, and the electronic device 800 may negotiate with the first external electronic device 900 in various types without being limited thereto. The first external electronic device 900 may transmit an acceptance message regarding a negotiation result to the electronic device 800, and an operation of receiving the acceptance message may be omitted.

In operation 2040, the first external electronic device 900 may receive information related to the assistance in the advertising signal transmission from the electronic device 800, based on the negotiation result. In an embodiment, the information related to the assistance in the advertising signal transmission may include time information for starting the assistance in the advertising signal transmission. For example, the first external electronic device 900 may receive information including a timing instant value from the electronic device 800, and may identify the time to start the assistance in the advertising signal transmission. Further, the first external electronic device 900 may also receive a BIS event start time and/or the BIG synchronization information from the electronic device 800.

In operation 2050, the first external electronic device 900 may broadcast the advertising signal, based on the negotiation result and the information related to the assistance in the advertising signal transmission. The first external electronic device 900 may broadcast the EA signal and/or the PA signal for the entire period or the partial period.

In an embodiment, when receiving a request to stop transmitting the advertising signal from the electronic device 800, the first external electronic device 900 may stop broadcasting the advertising signal.

In an embodiment, when receiving a command to stop the assistance in the advertising signal transmission or determining that the assistance in the advertising signal transmission needs to stop as available resources are less than a threshold value, the first external electronic device 900 may report a stoppage of the assistance in the advertising signal transmission to the electronic device 800 through a first external link or an account-based server, and may stop transmitting the advertising signal. In the case of receiving the request for the assistance in the advertising signal transmission through the first external link, when the first external link is released and thus it is impossible to report the stoppage of the assistance in the advertising signal transmission, the first external electronic device 900 may immediately stop broadcasting the advertising signal, may maintain transmission of the advertising signal for a predetermined time then stop the transmission, or may maintain broadcast of the advertising signal until the first external link is recovered or re-established and then determine whether to continue to broadcast the advertising signal after a renegotiation process.

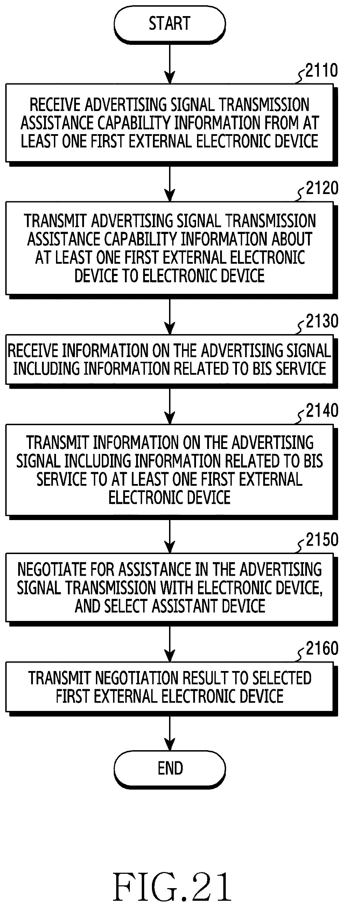

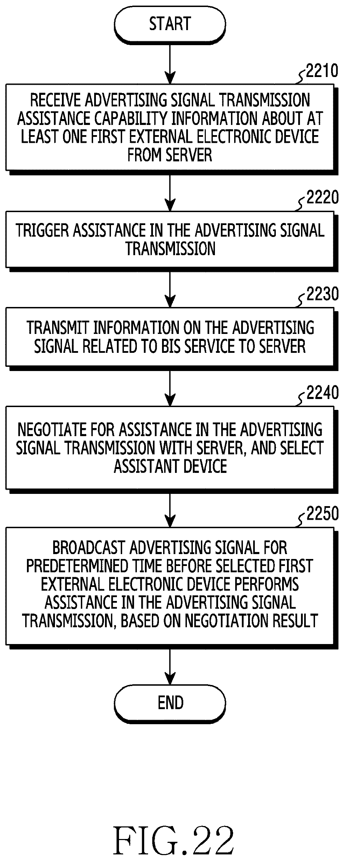

FIG. 21 and FIG. 22 illustrate an operation of assisting in an advertising signal transmission for a BIS service by using an account server 1300 when an electronic device 800 and at least one first external electronic device, for example, first external electronic device #1 901 and first external electronic device #2 902, are registered with the same account in the account server 1300.

FIG. 21 is a flowchart illustrating an operating method of an account server according to an embodiment.

In operation 2110, an account server 1300 may receive advertising signal transmission assistance capability information from at least one first external electronic device 900. In an embodiment, the advertising signal transmission assistance capability information may include information about whether assistance in an advertising signal transmission is possible and/or information about available resources. In an embodiment, the account server 1300 may configure a time period for receiving advertising signal transmission assistance capability information from a plurality of first external electronic devices, and may receive advertising signal transmission assistance capability information in the time period. In an embodiment, the advertising signal transmission assistance capability information may be periodically updated.

In operation 2120, the account server 1300 may transmit information about the at least one external electronic device 900 to the electronic device 800. Specifically, the account server 1300 may transmit the advertising signal transmission assistance capability information received from the at least one first external electronic device 900 to the electronic device 800.

In operation 2130, when the electronic device 800 starts a BIS service, the account server 1300 may receive information on the advertising signal including information related to the BIS service from the electronic device 800. In an embodiment, the information on the advertising signal may include at least one of the information related to the BIS service, extended advertising (EA) information, periodic advertising (PA) information, or broadcast isochronous group (BIG) synchronization information. Specifically, the information on the advertising signal may include ADV_EXT_IND and AUX_ADV_IND information of an EA signal and/or AUX_SYNC_IND information of a PA signal.

In operation 2140, the account server 1300 may transmit the information on the advertising signal including the information related to the BIS service received from the electronic device 800 to the at least one first external electronic device 900.

In operation 2150, the account server 1300 may perform a negotiation for assistance in an advertising signal transmission with the electronic device 800. The account server 1300 may perform the negotiation for the assistance in the advertising signal transmission with the electronic device 800, based on the information on the advertising signal. In an embodiment, the electronic device 800 may negotiate with the account server 1300 for at least one of the type of the advertising signal, assistance time, and an assistance type for the assistance in the advertising signal transmission. The type of the advertising signal may include an EA signal and a PA signal, the assistance time may include at least part of a BIS service period, a period determined by a preset algorithm, and a period in which the electronic device is unable to broadcast the advertising signal, and the assistance type may include a first assistance type which the first external electronic device 900 broadcasts at least one of an EA signal and a PA signal that are the same as an EA signal and a PA signal of the electronic device 800 and a second assistance type which the first external electronic device 900 generates and broadcasts at least one of an EA signal and a PA signal including BIG synchronization information that is the same as the BIG synchronization information included in the EA signal and the PA signal of the electronic device 800.

In an embodiment, when there is the plurality of first external electronic devices, the account server 1300 may perform a negotiation for a first external electronic device in the same space that is capable of assisting the electronic device 800 in transmitting an advertising signal. When there is the plurality of first external electronic devices, the account server 1300 may perform a negotiation by selecting one first external electronic device according to a preset criterion or a user input. The preset criterion may be the distance to the electronic device 800, an available resource, the order of registration in the account server 1300, the order of latest connections, or the order of names. However, the criterion is only for illustration, and various criteria may be configured without being limited thereto. Further, it is possible to negotiate such that each first external electronic device assists in transmitting each of an EA signal or a PA signal.

In an embodiment, when performing the negotiation, the electronic device 800 and the account server 1300 may determine a predetermined time when the electronic device 800 needs to broadcast an advertising signal. When using the account server 1300, unlike a Bluetooth link, it may be difficult to accurately calculate a timing instant value. Accordingly, the electronic device 800 may broadcast the EA signal and/or the PA signal for a certain period of time even after completing the negotiation, and the first external electronic device 900 may scan the EA signal and/or the PA signal transmitted by the electronic device 800, may identify a channel sequence and timing in which the advertising signal to be broadcast by the assistance needs to be broadcast, and may then start the assistance in the advertising signal transmission.

In operation 2160, the account server 1300 may transmit a negotiation result to the selected first external electronic device 900.

FIG. 22 is a flowchart illustrating an operating method of an electronic device according to an embodiment.

In operation 2210, an electronic device 800 may receive information about at least one first external electronic device 900 from an account server 1300. Specifically, the electronic device 800 may receive, from the account server 1300, advertising signal transmission assistance capability information that the account server 1300 receives from at least one first external electronic device 900. In an embodiment, the advertising signal transmission assistance capability information may include information about whether the at least one first external electronic device 900 is capable of assistance in an advertising signal transmission and/or information about available resources.

In operation 2220, the electronic device 800 may trigger assistance in an advertising signal transmission. In an embodiment, the electronic device 800 may determine whether the assistance in the advertising signal transmission is necessary, based on at least one of an external input, an available radio resource, and a radio frequency (RF) environment, while or even before performing a BIS service. For example, the electronic device 800 may determine whether the assistance in the advertising signal transmission is necessary, based on at least one of a user input, a preset policy for a radio resource, external interference or noise, or scheduling of the electronic device 800. The electronic device 800 may determine that the assistance in the advertising signal transmission is necessary when receiving a user input while generating a BIG or during a BIS service-related operation by generating a BIG, when the BIS service overlaps with the schedules of other BT tasks, such as an LE scan, paging, inquiry, or an inquiry scan, when external LE or a basic rate (BR)/enhanced data rate (EDR) link is generated and a corresponding operation period overlaps with the broadcast time of an EA signal and/or PA signal or there is a need to prepare for a case where the operation period overlaps the broadcast time of the EA signal and/or PA signal, or when broadcast is impossible in some periods due to coexistence (COEX) of Wi-Fi. When determining that the assistance in the advertising signal transmission is necessary, the electronic device 800 may trigger the assistance in the advertising signal transmission.

In operation 2230, the electronic device 800 may transmit information on the advertising signal including information related to a BIS service to the account server 1300. The electronic device 800 may transmit, to the account server 1300, the information that the account server 1300 needs to transmit to a plurality of first external electronic devices. In an embodiment, the information on the advertising signal may include at least one of the information related to the BIS service, extended advertising (EA) information, periodic advertising (PA) information, or broadcast isochronous group (BIG) synchronization information. Specifically, the information on the advertising signal may include ADV_EXT_IND and AUX_ADV_IND information of the EA signal and/or AUX_SYNC_IND information of the PA signal.

In operation 2240, the electronic device 800 may perform a negotiation for assistance in an advertising signal transmission with the account server 1300 instead of a first external device that broadcasts an advertising signal instead. The electronic device 800 may perform the negotiation for the assistance in the advertising signal transmission with the account server 1300, based on the information on the advertising signal. In an embodiment, the electronic device 800 may negotiate with the account server 1300 for at least one of the type of the advertising signal, assistance time, and an assistance type for the assistance in the advertising signal transmission. The type of the advertising signal may include an EA signal and a PA signal, the assistance time may include at least part of a BIS service period, a period determined by a preset algorithm, and a period in which the electronic device is unable to broadcast the advertising signal, and the assistance type may include a first assistance type which the first external electronic device 900 broadcasts at least one of an EA signal and a PA signal that are the same as an EA signal and a PA signal of the electronic device 800 and a second assistance type which the first external electronic device 900 generates and broadcasts at least one of an EA signal and a PA signal including BIG synchronization information that is the same as the BIG synchronization information included in the EA signal and the PA signal of the electronic device 800.

In an embodiment, when there is the plurality of first external electronic devices, the account server 1300 may perform a negotiation for a first external electronic device in the same space that is capable of assisting the electronic device 800 in transmitting an advertising signal. When there is the plurality of first external electronic devices, the account server 1300 may perform a negotiation by selecting one first external electronic device according to a preset criterion or a user input. The preset criterion may be the distance to the electronic device 800, an available resource, the order of registration in the account server 1300, the order of latest connections, or the order of names. However, the criterion is only for illustration, and various criteria may be configured without being limited thereto. Further, it is possible to negotiate such that each first external electronic device assists in transmitting each of an EA signal or a PA signal.

In an embodiment, when performing the negotiation, the electronic device 800 and the account server 1300 may determine a predetermined time when the electronic device 800 needs to broadcast an advertising signal. When using the account server 1300, unlike a Bluetooth link, it may be difficult to accurately calculate a timing instant value. Accordingly, the electronic device 800 may broadcast the EA signal and/or the PA signal for a certain period of time even after completing the negotiation, and the first external electronic device 900 may scan the EA signal and/or the PA signal broadcast by the electronic device 800, may identify a channel sequence and timing in which the advertising signal to be broadcast by the assistance needs to be broadcast, and may then start the assistance in the advertising signal transmission.

In operation 2250, the electronic device 800 may broadcast an advertising signal for the predetermined time before the selected first external electronic device 900 performs assistance in the advertising signal transmission, based on a negotiation result. For example, the electronic device 800 may broadcast the advertising signal for the predetermined time determined in the negotiation.

According to an embodiment, the first external electronic device 900 may assist transmission of the advertising signal performed by the electronic device 800, thereby flexibly managing resources of the electronic device 800 and providing fast BIS synchronization for a second external electronic device to improve audio quality.

An electronic device 800 according to an embodiment may include a communication circuitry 810 configured to support Bluetooth Low Energy, BLE, communication, at least one processor 830 and memory (820) storing instructions that, when executed by the at least one processor (830), cause the electronic device (800) to transmit a request for assistance in an advertising signal transmission for a broadcast isochronous stream, BIS, service to a first external electronic device 900, transmit information on the advertising signal including information related to the BIS service to the first external electronic device 900, perform a negotiation for the assistance in the advertising signal transmission with the first external electronic device 900, based on the information on the advertising signal, and transmit information related with the assistance in the advertising signal transmission to the first external electronic device 900, based on a negotiation result.

In an embodiment, the instructions, when executed by the at least one processor 830 may further cause the electronic device 800 to determine whether the assistance in the advertising signal transmission is required, based on at least one of an external input, an available radio resource, or a radio frequency, RF, environment, while performing the BIS service.

In an embodiment, the information related to the BIS service may include at least one of extended advertising, EA, information, periodic advertising, PA, information, or broadcast isochronous group, BIG, synchronization information.

In an embodiment, the instructions, when executed by the at least one processor 830 may further cause the electronic device 800 to perform a negotiation for at least one of a type of the advertising signal, assistance time, or an assistance type for the assistance in the advertising signal transmission when performing the negotiation for the assistance in the advertising signal transmission with the first external electronic device 900.

In an embodiment, the type of the advertising signal may include an EA signal and a PA signal, the assistance time includes at least part of a BIS service period, a period determined by a preset algorithm, and a period in which the electronic device 800 is unable to broadcast the advertising signal, and the assistance type may include a first assistance type according to which the first external electronic device 900 broadcasts at least one of an EA signal and a PA signal that are the same as an EA signal and a PA signal of the electronic device 800 and a second assistance type according to which the first external electronic device 900 generates and broadcasts an independent PA signal including broadcast isochronous group, BIG, synchronization information that is the same as BIG synchronization information included in the PA signal of the electronic device 800 and an independent EA signal including PA information to synchronize with the independent PA signal.

In an embodiment, the information related with the assistance in the advertising signal transmission may include time information for starting the assistance in the advertising signal transmission.

In an embodiment, the instructions, when executed by the at least one processor 830 may further cause the electronic device 800 to broadcast the advertising signal, based on at least one of an external input, a determination as to whether a predetermined condition is satisfied, or a notification from the first external electronic device 900.

In an embodiment, the instructions, when executed by the at least one processor 830 may further cause the electronic device 800 to perform the negotiation for the assistance in the advertising signal transmission with each first external electronic device 900 when a plurality of first external electronic devices 900.

In an embodiment, the instructions, when executed by the at least one processor 830 may further cause the electronic device 800 to perform the negotiation for the assistance in the advertising signal transmission with the first external electronic device 900 through a server in case that the electronic device 800 and the first external electronic device 900 are related with a same account, and enable the electronic device 800 to transmit the advertising signal for a predetermined time, based on the negotiation result, the information related with the assistance in the advertising signal transmission may not be transmitted to the first external electronic device 900, and the electronic device 800 and the first external electronic device 900 may be registered in the server with the same account.

In an embodiment, the instructions, when executed by the at least one processor 830 may further cause the electronic device 800 to broadcast at least one BIS for at least one second external electronic device 1000.

An operating method of an electronic device 800 according to an embodiment may include transmitting a request for assistance in an advertising signal transmission for a broadcast isochronous stream, BIS, service to a first external electronic device 900 (1920), transmitting information on the advertising signal including information related to the BIS service to the first external electronic device 900 (1930), performing a negotiation for the assistance in the advertising signal transmission with the first external electronic device 900, based on the information on the advertising signal (1940), and transmitting information related with the assistance in the advertising signal transmission to the first external electronic device 900, based on a negotiation result (1950).

In an embodiment, the method may further include determining whether the assistance in the advertising signal transmission is required, based on at least one of an external input, an available radio resource, or a radio frequency, RF, environment, while performing the BIS service.

In an embodiment, the information related to the BIS service may include at least one of extended advertising, EA, information, periodic advertising, PA, information, or broadcast isochronous group, BIG, synchronization information.

In an embodiment, the performing of the negotiation for the assistance in the advertising signal transmission with the first external electronic device 900 may include performing a negotiation for at least one of a type of the advertising signal, assistance time, or an assistance type for the assistance in the advertising signal transmission.

In an embodiment, the type of the advertising signal may include an EA signal and a PA signal, the assistance time may include at least part of a BIS service period, a period determined by a preset algorithm, and a period in which the electronic device 800 is unable to broadcast the advertising signal, and the assistance type may include a first assistance type according to which the first external electronic device 900 broadcasts at least one of an EA signal and a PA signal that are the same as an EA signal and a PA signal of the electronic device 800 and a second assistance type according to which the first external electronic device 900 generates and broadcasts an independent PA signal including broadcast isochronous group, BIG, synchronization information that is the same as BIG synchronization information included in the PA signal of the electronic device 800 and an independent EA signal including PA information to synchronize with the independent PA signal.

In an embodiment, the information related with the assistance in the advertising signal transmission may include time information for starting the assistance in the advertising signal transmission.

In an embodiment, the method may further include broadcasting the advertising signal, based on at least one of an external input, a determination as to whether a predetermined condition is satisfied, or a notification from the first external electronic device 900.

In an embodiment, the performing of the negotiation for the assistance in the advertising signal transmission with the first external electronic device 900 may include performing the negotiation for the assistance in the advertising signal transmission with each first external electronic device 900 when there is a plurality of first external electronic devices 900.

In an embodiment, the method may further include performing the negotiation for the assistance in the advertising signal transmission with the first external electronic device 900 through a server in case that the electronic device 800 and the first external electronic device 900 are related with a same account and enabling the electronic device 800 to transmit the advertising signal for a predetermined time, based on the negotiation result, the information related with the assistance in the advertising signal transmission may not be transmitted to the first external electronic device 900, and the electronic device 800 and the first external electronic device 900 may be registered in the server with the same account.

In an embodiment, the method may further include broadcasting at least one BIS for at least one second external electronic device 1000.

The embodiments of the disclosure described and shown in the specification and the drawings are merely specific examples that have been presented to easily explain the technical contents of embodiments of the disclosure and help understanding of embodiments of the disclosure, and are not intended to limit the scope of embodiments of the disclosure. That is, it will be apparent to those skilled in the art that other variants based on the technical idea of the disclosure may be implemented. Furthermore, the above respective embodiments may be employed in combination, as necessary.

## Claims

1. An electronic device comprising:
a communication circuitry configured to support Bluetooth Low Energy (BLE) communication;
at least one processor; and
memory storing instructions that, when executed by the at least one processor, cause the electronic device to:
transmit a request for assistance in an advertising signal transmission for a broadcast isochronous stream (BIS) service to a first external electronic device;
transmit information on an advertising signal including information related to the BIS service to the first external electronic device;
perform a negotiation for the assistance in the advertising signal transmission with the first external electronic device, based on the information on the advertising signal; and
transmit information related with the assistance in the advertising signal transmission to the first external electronic device, based on the negotiation result.

2. The electronic device of claim 1, wherein the instructions, when executed by the at least one processor, cause the electronic device to:
determine whether the assistance in the advertising signal transmission is required, based on at least one of an external input, an available radio resource, or a radio frequency (RF) environment, while performing the BIS service.

3. The electronic device of claim 1,
wherein the information related to the BIS service includes at least one of extended advertising (EA) information, periodic advertising (PA) information, or broadcast isochronous group (BIG) synchronization information.

4. The electronic device of claim 1, wherein the instructions, when executed by the at least one processor, cause the electronic device to:
perform a negotiation for at least one of a type of the advertising signal, assistance time, or an assistance type for the assistance in the advertising signal transmission.

5. The electronic device of claim 4,
wherein the type of the advertising signal comprises an EA signal and a PA signal,
wherein the assistance time comprises at least a part of a BIS service period, a period determined by a preset algorithm, and a period in which the electronic device is unable to broadcast the advertising signal, and
wherein the assistance type comprises
a first assistance type according to which the first external electronic device broadcasts at least one of an EA signal and a PA signal that are the same as an EA signal and a PA signal of the electronic device and
a second assistance type according to which the first external electronic device generates and broadcasts an independent PA signal including broadcast isochronous group, BIG, synchronization information that is the same as BIG synchronization information included in the PA signal of the electronic device and an independent EA signal including PA information which is used to synchronize with the independent PA signal.

6. The electronic device of claim 1, wherein the information related with the assistance in the advertising signal transmission includes time information for starting the assistance in the advertising signal transmission.

7. The electronic device of claim 1, wherein the instructions, when executed by the at least one processor, cause the electronic device to:
broadcast the advertising signal, based on at least one of an external input, a determination as to whether a predetermined condition is satisfied, or a notification from the first external electronic device.

8. The electronic device of claim 1, wherein the instructions, when executed by the at least one processor, cause the electronic device to:
perform the negotiation for the assistance in the advertising signal transmission with each first external electronic device when a plurality of first external electronic devices exists.

9. The electronic device of claim 1, wherein the instructions, when executed by the at least one processor, cause the electronic device to:
perform the negotiation for the assistance in the advertising signal transmission with the first external electronic device through a server in case that the electronic device and the first external electronic device are related with a same account; and
enable the electronic device to transmit the advertising signal for a predetermined time, based on the negotiation result,
wherein the information related with the assistance in the advertising signal transmission is not transmitted to the first external electronic device, and
wherein the electronic device and the first external electronic device are registered in the server with the same account.

10. The electronic device of claim 1, wherein the instructions, when executed by the at least one processor, cause the electronic device to:
broadcast at least one BIS for at least one second external electronic device.

11. An operating method of an electronic device, the method comprising:
transmitting a request for assistance in an advertising signal transmission for a broadcast isochronous stream (BIS) service to a first external electronic device;
transmitting information on an advertising signal comprising information related to the BIS service to the first external electronic device;
performing a negotiation for the assistance in the advertising signal transmission with the first external electronic device, based on the information on the advertising signal; and
transmitting information related with the assistance in the advertising signal transmission to the first external electronic device, based on the negotiation result.

12. The method of claim 11, further comprising determining whether the assistance in the advertising signal transmission is required, based on at least one of an external input, an available radio resource, or a radio frequency (RF) environment, while performing the BIS service,
wherein the information related to the BIS service includes at least one of extended advertising (EA) information, periodic advertising (PA) information, or broadcast isochronous group (BIG) synchronization information.

13. The method of claim 11,
wherein the performing of the negotiation for the assistance in the advertising signal transmission with the first external electronic device comprises performing a negotiation for at least one of a type of the advertising signal, assistance time, or an assistance type for the assistance in the advertising signal transmission,
wherein the type of the advertising signal comprises an EA signal and a PA signal,
wherein the assistance time comprises at least part of a BIS service period, a period determined by a preset algorithm, and a period in which the electronic device is unable to broadcast the advertising signal, and
wherein the assistance type includes
a first assistance type according to which the first external electronic device broadcasts at least one of an EA signal and a PA signal that are the same as an EA signal and a PA signal of the electronic device and
a second assistance type according to which the first external electronic device generates and broadcasts an independent PA signal including broadcast isochronous group, BIG, synchronization information that is the same as BIG synchronization information included in the PA signal of the electronic device and an independent EA signal including PA information which is used to synchronize with the independent PA signal.

14. The method of claim 11, wherein the information related with the assistance in the advertising signal transmission comprises time information for starting the assistance in the advertising signal transmission.

15. The method of claim 11, further comprising:
performing the negotiation for the assistance in the advertising signal transmission with the first external electronic device through a server in case that the electronic device and the first external electronic device are related with a same account; and
enabling the electronic device to transmit the advertising signal for a predetermined time, based on the negotiation result,
wherein the information related with the assistance in the advertising signal transmission is not transmitted to the first external electronic device, and
wherein the electronic device and the first external electronic device are registered in the server with the same account.
